# EUROPEAN PATENT APPLICATION

(11) **EP 4 044 540 A1**
(43) Date of publication of application: **17.08.2022**
(21) Application number: 20886354.8
(22) Date of filing: 30.10.2020
(51) Int. Cl.: H04L 27/26, H04B 1/69

(54) **SIGNAL TRANSMISSION METHOD AND APPARATUS**

(30) Priority: 15.11.2019 CN 201911120977
(71) Applicant: Huawei Technologies Co., Ltd., Shenzhen, Guangdong 518129 (CN)
(72) Inventor: QIAO, Fei, Chengdu, Sichuan 611756 (CN); LIN, Wei, Shenzhen, Guangdong 518129 (CN); YAN, Min, Shenzhen, Guangdong 518129 (CN); LEI, Xianfu, Chengdu, Sichuan 611756 (CN); TANG, Xiaohu, Chengdu, Sichuan 611756 (CN)
(74) Representative: MERH-IP Matias Erny Reichl Hoffmann Patentanwälte PartG mbB
(86) International application number: PCT/CN2020/125528
(87) International publication number: WO 2021/093616

(57) **Abstract**

This application provides a signal transmission method and apparatus, to implement phase tracking in a DFT-S-OFDM system. The method includes: A transmit end determines a guard interval sequence based on a quantity of channel bondings and a quantity of subcarriers corresponding to a resource element of the channel bonding; and then the transmit end sends a signal, where the signal includes the guard interval sequence, and the guard interval sequence is used to determine phase noise of the signal. In other words, in the DFT-S-OFDM system, a guard interval sequence of a sent signal or a received signal is determined based on a quantity of channel bondings and a quantity of subcarriers corresponding to a resource element of the channel bonding, and phase tracking may be implemented in the DFT-S-OFDM system. Therefore, phase noise of the signal can be determined in the DFT-S-OFDM system.

## Description

### CROSS-REFERENCE TO RELATED APPLICATIONS

This application claims priority to Chinese Patent Application No. 201911120977.6, filed with the China National Intellectual Property Administration on November 15, 2019 and entitled "SIGNAL TRANSMISSION METHOD AND APPARATUS", which is incorporated herein by reference in its entirety.

### TECHNICAL FIELD

This application relates to the field of communication technologies, and in particular, to a signal transmission method and apparatus.

### BACKGROUND

With the development of wireless communication technologies, how to improve spectrum utilization and transmission reliability of wireless communication systems is a concern at present. Orthogonal frequency division multiplexing (orthogonal frequency division multiplexing, OFDM) is easy to implement and widely applied. Therefore, OFDM is a mainstream technology in current wireless communication, and is used in many standards, for example, 802.11, 802.16, and 802.15.

The OFDM technology is already used in a wireless local area network (wireless local area network, WLAN) standard, and 802.11 ac/n is currently a widely applied WLAN standard. To improve data transmission rate and throughput, IEEE 802.11ax/ad/ay is successively developed. 802.11ad/ay is used as an auxiliary technology. It operates on a 60 GHz frequency band, has ultra-large bandwidth, has no interference, and has a high transmission rate. A transmission rate of the 802.11ad based on 60 GHz can reach 8 Gbit/s, and that of the 802.11ay can reach 176 Gbit/s. Therefore, the 802.11ay may be applied to scenarios such as high-definition transmission, wireless projection, and wireless backhaul.

In the 802.11ay standard, an OFDM transmission technology or a single carrier transmission technology is used. However, the OFDM transmission technology has a high peak to average power ratio (peak to average power ratio, PAPR), and the single carrier transmission technology has a low PAPR. It is difficult to perform frequency division multiplexing on a single carrier. To implement frequency division multiplexing with low PAPR, a discrete fourier transformation spread orthogonal frequency division multiplexing (discrete fourier transformation spread orthogonal frequency division multiplexing, DFT-S-OFDM) transmission technology is introduced. How to implement phase tracking based on the DFT-S-OFDM transmission technology is a problem to be resolved.

### SUMMARY

This application provides a signal transmission method and apparatus, to implement phase tracking in a DFT-S-OFDM system.

According to a first aspect, this application provides a signal transmission method, and the method may be applied to the DFT-S-OFDM system. The method includes: A transmit end determines a guard interval (guard interval, GI) sequence based on a quantity of channel bondings and a quantity of subcarriers corresponding to a resource element of the channel bonding, and then sends a signal, where the signal includes the determined guard interval sequence, and the guard interval sequence is used to determine phase noise of the signal.

According to this solution, in the DFT-S-OFDM system, a guard interval sequence of a sent signal or a received signal is determined based on the quantity of the channel bondings and the quantity of subcarriers corresponding to the resource element of the channel bonding, to determine phase noise of the DFT-S-OFDM system. Therefore, phase tracking in the DFT-S-OFDM system can be implemented.

In a possible implementation, when the quantity of channel bondings is 1, and the resource element corresponds to 128 subcarriers, a length of the guard interval sequence is 8, 16, or 32.

In a possible implementation, when the quantity of channel bondings is 2, and the resource element corresponds to 256 subcarriers, a length of the guard interval sequence is 16, 32, or 64.

In a possible implementation, when the quantity of channel bondings is 3, and the resource element corresponds to 384 subcarriers, a length of the guard interval sequence is 24, 48, or 96.

In a possible implementation, when the quantity of channel bondings is 4, and the resource element corresponds to 512 subcarriers, a length of the guard interval sequence is 32, 64, or 128.

In a possible implementation, when the channel includes eight guard interval sequences, and a length of the guard interval sequence is 8, 16, 32, or 128, the eight guard interval sequences are eight mutually different and orthogonal sequences.

In a possible implementation, when the channel includes eight guard interval sequences, and a length of the guard interval sequence is 24 or 48, the eight guard interval sequences include two mutually different sequences.

In a possible implementation, when the channel includes eight guard interval sequences, and a length of the guard interval sequence is 64, the eight guard interval sequences include five mutually different sequences, and there are two pairs of orthogonal sequences and two pairs of identical sequences.

In a possible implementation, when the channel includes eight guard interval sequences, and a length of the guard interval sequence is 96, the eight guard interval sequences include four mutually different sequences.

To further improve precision of determining the phase noise, the signal may further include a pilot sequence.

In a possible implementation, a length of the pilot sequence may be 8. When the signal includes eight pilot sequences, the eight pilot sequences are different from each other and are orthogonal to each other.

According to a second aspect, this application provides a signal transmission method, and the method is applied to a DFT-S-OFDM system. The method includes: a receive end receives a signal, where the signal includes a guard interval sequence, and the guard interval sequence is determined by a transmit end that sends the signal based on a quantity of channel bondings and a quantity of subcarriers corresponding to a resource element of the channel bonding; and then determines phase noise of the signal based on the guard interval sequence.

According to this solution, in the DFT-S-OFDM system, a guard interval sequence in a received signal is determined, so that the phase noise determined in the DFT-S-OFDM system can be determined. Phase tracking in the DFT-S-OFDM system can be realized.

In a possible implementation, when the quantity of channel bondings is 1, and the resource element corresponds to 128 subcarriers, a length of the guard interval sequence is 8, 16, or 32.

In a possible implementation, when the quantity of channel bondings is 2, and the resource element corresponds to 256 subcarriers, a length of the guard interval sequence is 16, 32, or 64.

In a possible implementation, when the quantity of channel bondings is 3, and the resource element corresponds to 384 subcarriers, a length of the guard interval sequence is 24, 48, or 96.

In a possible implementation, when the quantity of channel bondings is 4, and the resource element corresponds to 512 subcarriers, a length of the guard interval sequence is 32, 64, or 128.

In a possible implementation, when the channel includes eight guard interval sequences, and a length of the guard interval sequence is 8, 16, 32, or 128, the eight guard interval sequences are eight mutually different and orthogonal sequences.

In a possible implementation, when the channel includes eight guard interval sequences, and a length of the guard interval sequence is 24 or 48, the eight guard interval sequences include two mutually different sequences.

In a possible implementation, when the channel includes eight guard interval sequences, and a length of the guard interval sequence is 64, the eight guard interval sequences include five mutually different sequences, and there are two pairs of orthogonal sequences and two pairs of identical sequences.

In a possible implementation, when the channel includes eight guard interval sequences, and a length of the guard interval sequence is 96, the eight guard interval sequences include four mutually different sequences.

In a possible implementation, the signal sent by the transmit end may further include a pilot sequence.

In a possible implementation, a length of the pilot sequence is 8. When the signal includes eight pilot sequences, the eight pilot sequences are different from each other and are orthogonal to each other.

According to a third aspect, this application provides a communication apparatus. The communication apparatus has a function of implementing the transmit end in the first aspect or the receive end in the second aspect. The function may be implemented by hardware, or may be implemented by hardware executing corresponding software. The hardware or software includes one or more units or modules corresponding to the foregoing functions.

In a possible implementation, the communication apparatus may be the transmit end. For beneficial effects, refer to the description of the first aspect. Details are not described herein again. The communication apparatus may include a transceiver and a processor. The processor may be configured to support the communication apparatus in performing a corresponding function of the foregoing transmit end, and the transceiver is configured to support communication between the communication apparatus and the receive end. The transceiver may be an independent receiver, an independent transmitter, a transceiver integrated with a receiving/transmission function, or an interface circuit. Optionally, the communication apparatus may further include a memory, and the memory may be coupled to the processor, and stores program instructions and data that are necessary to the communication apparatus.

In a possible implementation, the transmit end may be a terminal device, or a module in the terminal device, for example, a chip, a chip system, or a circuit. Alternatively, the transmit end may be a network device or a module in the network device, for example, a chip, a chip system, or a circuit.

In another possible implementation, the communication apparatus may be the receive end. For beneficial effects, refer to the description of the second aspect. Details are not described herein again. The communication apparatus may include a transceiver and a processor. The processor may be configured to support the communication apparatus in performing a corresponding function of the foregoing receive end. The transceiver is configured to support communication between the communication apparatus and the transmit end. The transceiver may be an independent receiver, an independent transmitter, a transceiver integrated with a receiving/transmission function, or an interface circuit. Optionally, the communication apparatus may further include a memory, and the memory may be coupled to the processor, and stores program instructions and data that are necessary to the communication apparatus.

In a possible implementation, the receive end may be a terminal device, or a module in the terminal device, for example, a chip, a chip system, or a circuit. Alternatively, the receive end may be a network device or a module in the network device, for example, a chip, a chip system, or a circuit.

According to a fourth aspect, this application provides a communication apparatus, configured to implement the method according to any one of the first aspect or the possible implementations of the first aspect, or configured to implement the method according to any one of the second aspect or the possible implementations of the second aspect. The communication apparatus includes corresponding function modules, respectively configured to implement steps in the foregoing method. The functions may be implemented by hardware, or may be implemented by hardware executing corresponding software. The hardware or software includes one or more modules corresponding to the function.

In a possible implementation, the communication apparatus may be a transmit end, and the communication apparatus may include a processing unit and a transceiver unit. These units may perform corresponding functions of the transmit end in the foregoing method examples. For details, refer to detailed descriptions in the method examples. Details are not described herein again.

In a possible implementation, the communication apparatus may further be a receive end, and the communication apparatus may include a transceiver unit and a processing unit. These units may perform corresponding functions of the receive end in the foregoing method examples. For details, refer to detailed descriptions in the method examples. Details are not described herein again.

According to a fifth aspect, this application provides a communication system, where the communication system includes a transmit end and a receive end. The transmit end may be configured to perform the first aspect or any method in the first aspect, and the receive end may be configured to perform the second aspect or any method in the second aspect.

According to a sixth aspect, this application provides a computer-readable storage medium, where the computer-readable storage medium stores a computer program or instructions, and when the computer program or the instructions is/are executed by a communication apparatus, the communication apparatus is enabled to perform the method in the first aspect or any possible implementation of the first aspect, or the communication apparatus is enabled to perform the method in the second aspect or any possible implementation of the second aspect.

According to a seventh aspect, this application provides a computer program product, where the computer program product includes a computer program or instructions, and when the computer program or instructions is/are executed by a communication apparatus, the method in the first aspect or any possible implementation of the first aspect is implemented, or the method in the second aspect or any possible implementation of the second aspect is implemented.

### BRIEF DESCRIPTION OF DRAWINGS

FIG. 1a is a schematic diagram of an architecture of a communication system according to this application;
FIG. 1b is a schematic diagram of a communication module according to this application;
FIG. 1c is a schematic diagram depicting a structure of a DFT-S-OFDM transmitter according to this application;
FIG. 2 is a schematic flowchart of a signal transmission method according to this application;
FIG. 3 is a schematic diagram depicting a structure of a DFT-S-OFDM symbol according to this application;
FIG. 4a is a schematic diagram of a spectrum resource division manner according to this application;
FIG. 4b is a schematic diagram of another spectrum resource division manner according to this application;
FIG. 4c is a schematic diagram of still another spectrum resource division manner according to this application;
FIG. 4d is a schematic diagram of yet another spectrum resource division manner according to this application;
FIG. 5(a) to FIG. 5(c) is a schematic diagram of CCDF curves of PAPRs of guard interval sequences according to this application;
FIG. 6(a) to FIG. 6(c) is a schematic diagram of simulation results of phase tracking performance of different types of guard interval sequences of different guard interval sequences according to this application;
FIG. 7(d) to FIG. 7(f) is another schematic diagram of CCDF curves of PAPRs of guard interval sequences according to this application;
FIG. 8(g) to FIG. 8(i) is still another schematic diagram of CCDF curves of PAPRs of guard interval sequences according to this application;
FIG. 9(j) to FIG. 9(1) is yet another schematic diagram of CCDF curves of PAPRs of guard interval sequences according to this application;
FIG. 10 is a schematic diagram of a mapping between a data symbol, a pilot symbol, and a guard interval sequence according to this application;
FIG. 11 is a schematic diagram of simulation results of phase tracking performance corresponding to different pilot symbol lengths according to this application;
FIG. 12 is a schematic diagram of simulation results of tracking performance of different types of pilot sequences with a same quantity of points according to this application;
FIG. 13 is a schematic diagram depicting a structure of a communication apparatus according to this application;
FIG. 14 is a schematic diagram depicting a structure of a communication apparatus according to this application;
FIG. 15 is a schematic diagram depicting a structure of a terminal device according to this application; and
FIG. 16 is a schematic diagram depicting a structure of a network device according to this application.

### DESCRIPTION OF EMBODIMENTS

The following describes in detail embodiments of this application with reference to the accompanying drawings.

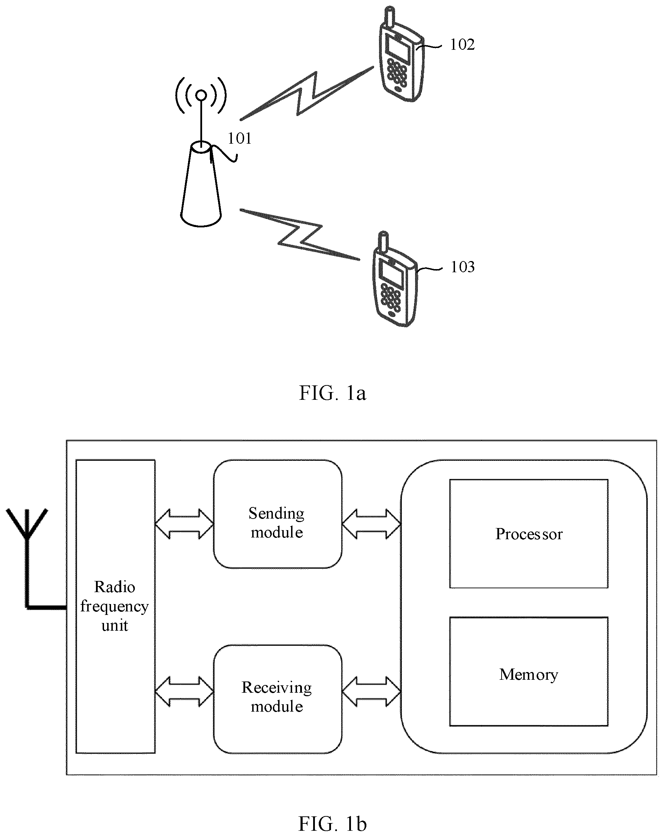

FIG. 1a is a schematic diagram of an architecture of an applicable communication system according to this application. As shown in FIG. 1a, the communication system may include an access point (access point, AP) 101 and at least one station (station, STA) (a STA 102 and a STA 103 are used as an example in FIG. 1a). WLAN communication is performed between the AP and the STA. The STA may be in a fixed location, or may be movable. A quantity of the APs and the STAs included in the communication system is not limited in this application.

The AP is also referred to as an access point, a hotspot, or the like. The AP is configured to provide wireless access service, allow other wireless devices to access, and provide data access. In other words, the AP is an access point for the STA to access a wired network, and may be deployed in a home, a building, or a campus. Atypical coverage radius is tens of meters to hundreds of meters. Certainly, the AP may also be deployed outdoors. The AP is equivalent to a bridge that connects a wired network and a wireless network. A main function of the AP is to connect wireless network clients together, and then connect the wireless network to an Ethernet. The AP may be a base station (base station), an evolved NodeB (evolved NodeB, eNodeB), a transmission reception point (transmission reception point, TRP), or a next generation NodeB (next generation NodeB, gNB) in a 5G communication system, a base station in a future communication system, an access node in a wireless fidelity (wireless-fidelity, WiFi) system, or the like. The AP may also be a module or unit that completes some functions of a base station. For example, the AP may be a central unit (central unit, CU), a distributed unit (distributed unit, DU), a router, a switch, a bridge, or the like. A specific technology and a specific device form used by the AP are not limited in this application. Optionally, the AP may support 802.11ax protocol. Further optionally, the AP may be a device that supports multiple WLAN protocols such as 802.11ac, 802.11n, 802.11g, 802.11b, and 802.11a.

The STA is a communication device connected to a wireless network, for example, a wireless communication chip or a terminal device. The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in this application. Optionally, the STA may support 802.11ax protocol. Further optionally, the STA supports multiple WLAN protocols such as 802.11ac, 802.11n, 802.11g, 802.11b, and 802.11a.

The following provides two possible scenarios to which the foregoing communication system may be applied.

Scenario 1: The AP performs WLAN communication with a single STA.

In scenario 1, the AP is a transmit end, and the STA is a receive end. In other words, the communication system may be used for single-user downlink transmission. Alternatively, the STA is a transmit end, and the AP is a receive end. In other words, the communication system may be used for single-user uplink transmission.

Scenario 2: The AP performs WLAN communication with a plurality of STAs.

In scenario 2, the AP communicating with a plurality of STAs at the same time may be further classified into two cases: The AP sends signals to the plurality of STAs at the same time, and the plurality of STAs send signals to the AP at the same time. The AP sends the signals to the plurality of STAs at the same time, that is, the AP is a transmit end, and the STA is a receive end. In other words, the communication system may be used for multi-user downlink transmission. The plurality of STAs send the signals to the AP, that is, the STA is a transmit end, and the AP is a receive end. In other words, the communication system may be used for multi-user uplink transmission.

The AP and the STA may communicate with each other on a spectrum of 2.4 gigahertz (gigahertz, GHz), may communicate with each other on a spectrum of 5 GHz, or may communicate with each other on a spectrum of 60 GHz.

It should be noted that system architectures and application scenarios described in this application are intended to describe the technical solutions in this application more clearly, but are not intended to limit the technical solutions provided in this application. A person of ordinary skill in the art may know that as the system architectures evolve and a new service scenario emerges, the technical solutions provided in this application are also applicable to a similar technical problem.

Based on the foregoing content, a signal transmission apparatus provided in this application may be located in a communication module of an AP, or may be located in a communication module of a SAT. FIG. 1b is a schematic diagram depicting a structure of a signal transmission apparatus according to this application. As shown in FIG. 1b, the apparatus includes a radio frequency unit (radio frequency unit, RF unit), a transport module (transport module, Tx module), a receive module (receive module, Rx module), a processor (processor), and a memory (memory). The Tx module transmits a to-be-sent signal to the RF unit for sending, and the Rx module receives the signal from the RF unit and transmits the signal to the processor for further processing, such as synchronization, channel estimation, and channel equalization.

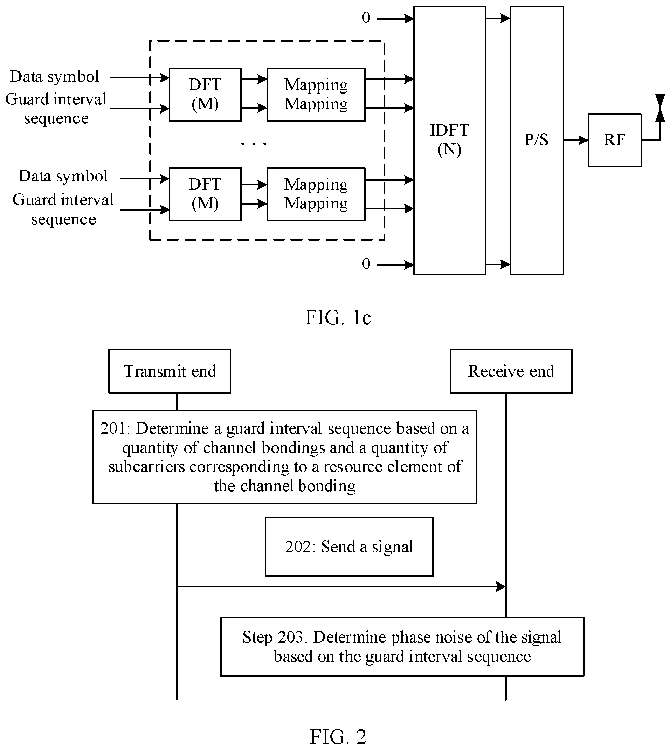

In a possible implementation, the signal transmission apparatus may be a DFT-S-OFDM transmitter. FIG. 1c is a schematic diagram depicting a structure of a DFT-S-OFDM transmitter according to this application. The DFT-S-OFDM transmitter includes a discrete fourier transformation (discrete fourier transform, DFT) module, a mapping module, a parallel/serial (parallel/serial, P/S) converter, a radio frequency (radio frequency, RF) module, and an antenna. The mapping module may be configured to map a signal output by a DFT to a subcarrier. M indicates a number of DFT points, and N indicates a number of IFFT points. It may be understood that the signal transmission apparatus may also be a DFT-S-OFDM receiver. For a structure of the DFT-S-OFDM receiver, refer to the foregoing schematic diagram depicting a structure of the DFT-S-OFDM transmitter. A signal processing process performed by the DFT-S-OFDM receiver is an inverse process of signal processing performed by the DFT-S-OFDM transmitter.

The signal transmission method provided in this application may be applied to a high frequency WLAN, for example, a WLAN whose operating frequency band is 60 GHz. To support multi-user frequency division multiplexing and reduce a peak to average power ratio (peak to average power ratio, PAPR) of a system, a discrete fourier transform spread spectrum OFDM (discrete fourier transform-spread OFDM, DFT-S-OFDM) transmission technology may be introduced into a next-generation 60 GHz WLAN. Channel allocation of the 60 GHz WLAN is different from that of an existing low-frequency WLAN technology (for example, 802.11n/ac/ax). For example, a basic channel bandwidth of 11ax is 20 megahertz (mega hertz, MHz), and a basic channel bandwidth of 11ad/ay is 2.16 GHz. If the DFT-S-OFDM transmission technology is introduced into the next-generation 60 GHz WLAN standard, and frequency division multiplexing is performed for a plurality of users, spectrum resource elements of the DFT-S-OFDM need to be re-divided. In addition, because phase noise is a type of noise introduced due to non-ideality of the frequency device in the communication system, and strength of the phase noise increases with increase of a carrier frequency, in a communication system that uses a high frequency carrier for transmission, for example, a communication system where DFT-S-OFDM transmission technology is used, effect of the phase noise is not negligible. Therefore, after the spectrum resources are re-divided, a corresponding guard interval sequence needs to be configured, so that the DFT-S-OFDM system performs phase tracking, that is, determines phase noise of a signal in the DFT-S-OFDM system.

In view of this, this application provides a signal transmission method. Refer to a schematic flowchart of the method shown in FIG. 2. The method may be applied to the communication system shown in FIG. 1a, the communication apparatus shown in FIG. 1b, or the DFT-S-OFDM transmitter shown in FIG. 1c. The method includes the following steps.

Step 201: A transmit end determines a guard interval sequence based on a quantity of channel bondings and a quantity of subcarriers corresponding to a resource element of the channel bonding.

Herein, the quantity of the channel bonding (channel bonding, CB) is n, and n is an integer greater than or equal to 1. When CB = 1, it indicates that communication devices (for example, between an AP and a STA) communicate through a single channel. When CB = 2, it indicates that two channels are bonded together, and communication devices (for example, an AP and a STA) communicate through the bonded channel. When CB = 3, it indicates that the three channels are bonded together, and communication devices (for example, an AP and a STA) communicate through the bonded channel. When CB = 4, it indicates that the four channels are bonded together, and communication devices (for example, an AP and a STA) communicate through the bonded channel. The same rule applies to other examples.

A resource element is also referred to as a resource block (resource block, RB). In a possible implementation, when communication is performed by using a 60 GHz WLAN, a width of each channel is 2.16 GHz, and a spectrum resource of each channel may include four resource elements, and each resource element may correspond to 128 subcarriers. When the width of the channel is 2^{∗}2.16 GHz, that is, CB = 2, a spectrum resource of each channel may include eight resource elements, and each resource element corresponds to 256 subcarriers. When the width of the channel is 3^{∗}2.16 GHz, that is, CB = 3, a spectrum resource of each channel may include 12 resource elements, and each resource element corresponds to 384 subcarriers. When the width of the channel is 4^{∗}2.16 GHz, that is, CB = 4, a spectrum resource of each channel may include 16 resource elements, and each resource element corresponds to 512 subcarriers.

In a possible implementation, there are a maximum of eight spatial streams, and a total of eight guard interval sequences may be configured. One spatial stream may correspond to one guard interval sequence. For example, when eight spatial streams are transmitted, eight guard interval sequences are required. For another example, when five spatial streams are transmitted, five guard interval sequences are required. A spatial stream refers to a total quantity of data streams transmitted in parallel in space when a transmit end sends a signal.

Step 202: The transmit end sends a signal, where the signal includes the guard interval sequence determined in step 201, and the guard interval sequence is used to determine phase noise of the signal. Correspondingly, a receive end receives the signal.

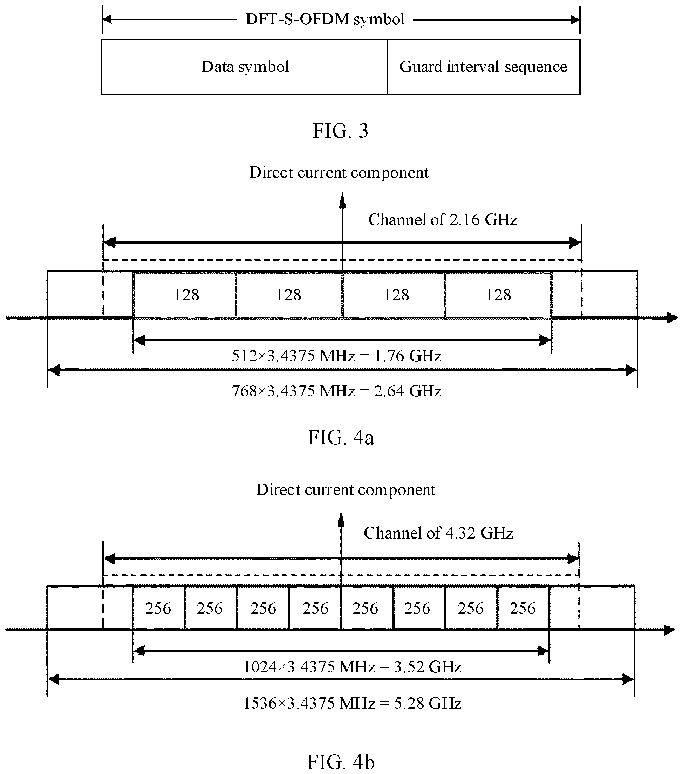

Herein, the signal may specifically include the guard interval sequence and a data symbol, where the guard interval sequence may be set before the data symbol, or may be set after the data symbol. FIG. 3 is a schematic diagram depicting a structure of a DFT-S-OFDM symbol according to this application by using an example in which a guard interval sequence is set after a data symbol. The DFT-S-OFDM symbol includes the data symbol and the guard interval sequence. One spatial stream may be divided into a plurality of DFT-S-OFDM symbols. The DFT-S-OFDM symbols have different data symbols but a same guard interval sequence. A DFT-S-OFDM symbol is also referred to as a block.

With reference to FIG. 1c, the data symbol and the guard interval sequence may be used as inputs to the DFT module. In other words, the DFT module may insert the guard interval sequence after the data symbol or before the data symbol. The mapping module maps a signal output by the DFT to a subcarrier, and then performs processing such as discrete fourier transformation (discrete fourier transformation, DFT), adding a demodulation reference signal, and the like. The processed signal is mapped to a corresponding subcarrier, transformed to a time-domain signal by using inverse fast fourier transformation (inverse fast Fourier transformation, IFFT), and sent.

Step 203: The receive end determines the phase noise of the signal based on the guard interval sequence.

In a possible implementation, after receiving the signal, the receive end performs cyclic prefix (cyclic prefix, CP) removal and fast fourier transformation (fast Fourier transformation, FFT) processing to obtain a demodulation reference signal (demodulation reference signal, DMRS). Then, channel estimation, equalization, and inverse discrete fourier transformation (inverse discrete fourier transformation, IDFT) processing are performed based on the DMRS, to extract a guard interval sequence in each DFT-S-OFDM symbol, and phase noise is determined based on the guard interval sequence. For example, a correlation operation may be performed on guard interval sequences in adjacent DFT-S-OFDM symbols, and an average value of correlation operation results is used as the phase noise. Phase noise in each DFT-S-OFDM symbol may be determined, and finally a processed signal is decoded, to obtain a final received signal.

It can be learned from the foregoing step 201 to step 203 that, in a DFT-S-OFDM system, a guard interval sequence of a sent signal or a received signal is determined based on a quantity of channel bondings and a quantity of subcarriers corresponding to a resource element of the channel bonding. Therefore, phase noise is determined in the DFT-S-OFDM system. Phase tracking in the DFT-S-OFDM system can be implemented.

In this application, a process of determining a corresponding guard interval sequence is described in detail based on resources divided in cases in which a quantity of channel bonding is equal to 1, 2, 3, and 4. In addition, a transmitter of a high frequency signal is very sensitive to a PAPR of a signal, and a high PAPR may result in low transmit power amplification efficiency. Therefore, when a guard interval sequence is configured, a PAPR corresponding to the guard interval sequence further needs to be considered. It may be understood that, because a DFT-S-OFDM symbol is superposed by a plurality of independently modulated subcarrier signals, when phases of subcarriers are the same or similar, the superposed signals are modulated by a same initial phase signal, thereby generating a large instantaneous power peak. This further leads to a higher PAPR. Because a dynamic range of a common power amplifier is limited, a signal with a large peak to average power ratio very likely enters a non-linear region of the power amplifier. This causes nonlinear distortion of the signal, obvious spectrum spreading interference and in-band signal distortion, and serious performance degrade of an entire system. In other words, a lower PAPR leads to a better guard interval sequence.

Case 1: A quantity of channel bondings is 1 (CB = 1), and each resource element corresponds to 128 subcarriers.

When CB = 1, a channel in a communication system is a single 2.16 GHz channel, and a spectrum resource of each channel may include four resource elements (Resource DFT-S-OFDM symbol, RB). For division of resource elements, refer to FIG. 4a. Each resource element corresponds to 128 subcarriers. A width of each subcarrier is 3.4375 MHz. Data and pilots occupy a total of 512 subcarriers, that is, the data and the pilots occupy a bandwidth of 1.76 GHz (that is 512 × 3.4375MHz = 1.76GHz), and bandwidth occupied by the data and the pilots after inverse fourier transformation is 2.64 GHz (that is 768 × 3.4375MHz = 2.64GHz). In addition, during frequency domain resource division, no subcarrier is idle in the center of the spectrum, and each divided frequency domain resource element occupies a central position of a channel. In other words, 512 subcarriers occupy the central position of the channel, and there is no idle subcarrier between the 512 subcarriers. In addition, a direct current position is a central position of each subcarrier. In FIG. 4a, a direct current position is a position indicated by an arrow. It should be understood that the resource division manner shown in FIG. 4a is merely an example.

Based on the case 1, a length of the guard interval sequence may be classified into three types: short, medium, and long, and corresponding lengths are respectively 8, 16, or 32. A guard interval sequence with a length of 8 may be used when channel condition is good, a guard interval sequence with a length of 16 may be used when the channel condition is normal, and a guard interval sequence with a length of 32 may be used when the channel condition is poor.

In a possible implementation, eight guard interval sequences may be eight mutually different and orthogonal sequences. For example, a first sequence is orthogonal to a second sequence, a third sequence is orthogonal to a fourth sequence, a fifth sequence is orthogonal to a sixth sequence, and a seventh sequence is orthogonal to an eighth sequence. The following separately provides an example of eight guard interval sequences whose lengths are 8, eight guard interval sequences whose lengths are 16, eight guard interval sequences whose lengths are 32, and a PAPR corresponding to each sequence.
(a) The eight guard interval sequences whose lengths of the guard interval sequence are 8 and corresponding PAPRs are as follows:
   a first sequence is (-1, 1, -1, -1, -1, 1, 1, 1), and a PAPR corresponding to the first sequence = 2.2810;
   a second sequence is (1, -1, 1, 1, 1, -1, -1, -1), and a PAPR corresponding to the second sequence = 2.2810;
   a third sequence is (-1, 1, 1, -1, -1, -1, -1, -1), and a PAPR corresponding to the third sequence is 2.6072;
   a fourth sequence is (1, -1, -1, 1, 1, 1, 1, 1), and a PAPR corresponding to the fourth sequence = 2.6072;
   a fifth sequence is (-1, -1, -1, -1, -1, 1, 1, -1), and a PAPR corresponding to the fifth sequence is 3.0788;
   a sixth sequence is (1, 1, 1, 1, 1, -1, -1, 1), and a PAPR corresponding to the sixth sequence = 3.0788;
   a seventh sequence is (-1, 1, -1, 1, 1, 1, -1, -1), and a PAPR corresponding to the seventh sequence = 3.2696; and
   an eighth sequence is (1, -1, 1, -1, -1, -1, 1, 1), and a PAPR corresponding to the eighth sequence = 3.2696.

It may be understood that the eight guard interval sequences whose length is 8 may be all multiplied by -1 or an imaginary number j. In other words, the first sequence to the eighth sequence are all multiplied by -1 or an imaginary number j, to obtain eight new guard interval sequences. For example, the first sequence is reversed as (1, - 1, 1, 1, 1, -1, -1, -1), and multiplying the first sequence by the imaginary number j is (1j, -1j, 1j, 1j, 1j, -1j, -1j, -1j).

(b) The eight guard interval sequences whose lengths of the guard interval sequence are 16 and corresponding PAPRs are as follows:
a first sequence is (1, -1, 1, 1, 1, -1, 1, 1, 1, 1, 1, -1, -1, -1, -1, 1), and a PAPR corresponding to the first sequence is 3.5762;
a second sequence is (-1, 1, -1, -1, -1, 1, -1, -1, -1, -1, -1, 1, 1, 1, 1, -1), and a PAPR corresponding to the second sequence is 3.5762;
a third sequence is (1, -1, 1, 1, 1, -1, 1, 1, 1, -1, -1, -1, -1, 1, 1, 1), and a PAPR corresponding to the third sequence is 3.9601;
a fourth sequence is (-1, 1, -1, -1, -1, 1, -1, -1, -1, 1, 1, 1, 1, -1, -1, -1), and a PAPR corresponding to the fourth sequence is 3.9601;
a fifth sequence is (1, 1, 1, 1, 1, -1, 1, -1, -1, 1, 1, -1, -1, -1, 1, 1), and a PAPR corresponding to the fifth sequence is 4.1029;
a sixth sequence is (-1, -1, -1, -1, -1, 1, -1, 1, 1, -1, -1, 1, 1, 1, -1, -1), and a PAPR corresponding to the sixth sequence is 4.1029;
a seventh sequence is (1, -1, 1, -1, -1, 1, 1, -1, -1, -1, 1, 1, 1, 1, 1, 1), and a PAPR corresponding to the seventh sequence is 4.1437; and
an eighth sequence is (-1, 1, -1, 1, 1, -1, -1, 1, 1, 1, -1, -1, -1, -1, -1, -1), and a PAPR corresponding to the eighth sequence is 4.1437.

It may be understood that the eight guard interval sequences whose length is 16 may be all multiplied by -1 or an imaginary number j. In other words, the first sequence to the eighth sequence are all multiplied by -1 or an imaginary number j, to obtain eight new guard interval sequences.

(c) The eight guard interval sequences whose lengths of the guard interval sequence are 32 and corresponding PAPRs are as follows:
a first sequence is (1, -1, -1, 1, -1, -1, -1, -1, -1, -1, 1, 1, 1, -1, 1, -1, -1, 1, 1, -1, 1, 1, 1, 1, -1, -1, 1, 1, 1, -1, 1, -1), and a PAPR corresponding to the first sequence is 4.4888;
a second sequence is (-1, 1, 1, -1, 1, 1, 1, 1, 1, 1, -1, -1, -1, 1, -1, 1, 1, -1, -1, 1, -1, -1, -1, -1, 1, 1, -1, -1, -1, 1, -1, 1), and a PAPR corresponding to the second sequence is 4.4888;
a third sequence is (1, -1, -1, 1, -1, -1, 1, 1, 1, -1, -1, 1, 1, 1, -1, -1, -1, -1, -1, -1, 1, -1, 1, -1, -1, -1, - 1, -1, -1, 1, -1, 1), and a PAPR corresponding to the third sequence is 4.5763;
a fourth sequence is (-1, 1, 1, -1, 1, 1, -1, -1, -1, 1, 1, -1, -1, -1, 1, 1, 1, 1, 1, 1, -1, 1, -1, 1, 1, 1, 1, 1, 1, -1, 1, -1), and a PAPR corresponding to the fourth sequence is 4.5763;
a fifth sequence is (1, -1, 1, -1, -1, -1, -1, -1, -1, 1, -1, 1, -1, -1, -1, -1, -1, -1, 1, 1, 1, -1, -1, 1, 1, 1, - 1, -1, 1, -1, -1, 1), and a PAPR corresponding to the fifth sequence is 4.6272.
a sixth sequence is (-1, 1, -1, 1, 1, 1, 1, 1, 1, -1, 1, -1, 1, 1, 1, 1, 1, 1, -1, -1, -1, 1, 1, -1, -1, -1, 1, 1, -1, 1, 1, -1), and a PAPR corresponding to the sixth sequence is 4.6272.
a seventh sequence is (1, 1, 1, 1, 1, -1, 1, -1, -1, -1, 1, 1, -1, 1, 1, -1, -1, 1, 1, -1, -1, -1, 1, 1, 1, -1, 1, - 1, 1, 1, 1, 1), and a PAPR corresponding to the seventh sequence is 4.6417; and
an eighth sequence is (-1, -1, -1, -1, -1, 1, -1, 1, 1, 1, -1, -1, 1, -1, -1, 1, 1, -1, -1, 1, 1, 1, -1, -1, -1, 1, -1, 1, -1, -1, -1, -1), and a PAPR corresponding to the eighth sequence is 4.6417.

It may be understood that the eight guard interval sequences whose length is 32 may be all multiplied by -1 or an imaginary number j. In other words, the first sequence to the eighth sequence are all multiplied by -1 or an imaginary number j, to obtain eight new guard interval sequences.

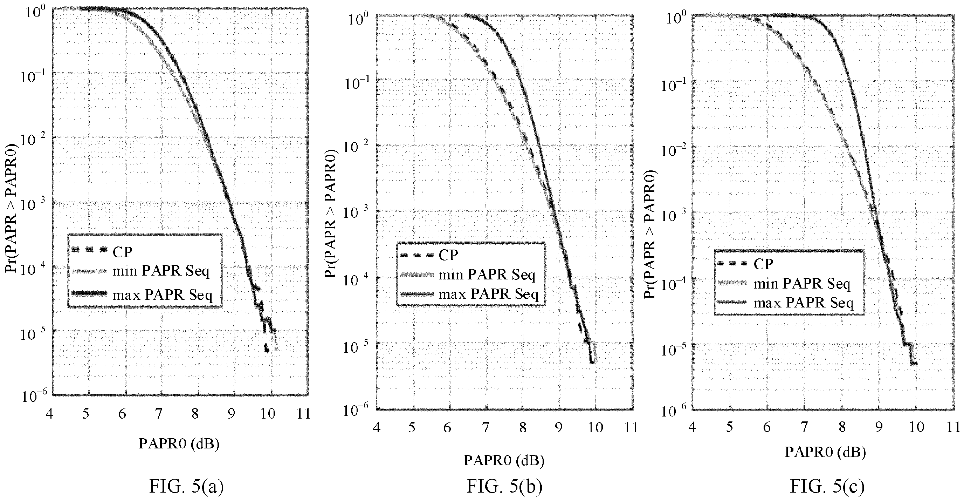

FIG. 5(a), FIG. 5(b), and FIG. 5(c) are schematic diagrams of complementary cumulative distribution function (complementary cumulative distribution function) curves of PAPRs of three guard interval sequences according to this application. The CCDF is used to define a probability that a PAPR value exceeds a threshold value z in a multi-carrier transmission system. In FIG. 5(a), min PAPR Seq is a schematic diagram of a CCDF curve of a PAPR of a guard interval sequence whose length is 8 in the foregoing guard interval sequence, and max PAPR Seq is a schematic diagram of a CCDF curve of selecting a PAPR of another guard interval sequence whose length is 8. In FIG. 5(b), min PAPR Seq is a schematic diagram of a CCDF curve of a PAPR of a guard interval sequence whose length is 16 in the foregoing guard interval sequence, and max PAPR Seq is a schematic diagram of a CCDF curve of selecting a PAPR of another guard interval sequence whose length is 16. In FIG. 5(c), min PAPR Seq is a schematic diagram of a CCDF curve of a PAPR of a guard interval sequence whose length of the guard interval sequence is 32, and max PAPR Seq is a schematic diagram of a CCDF curve of selecting a PAPR of another guard interval sequence whose length is 32. It can be learned that the corresponding guard interval sequence in the foregoing case 1 is used, and the corresponding PAPR is low. It should be understood that a lower PAPR is a better guard interval sequence.

In this application, a guard interval sequence may be a Galay (Galay) sequence, a quadrature amplitude modulation (quadrature amplitude modulation, QAM) sequence, a 16QAM sequence, a 64QAM sequence, an M sequence, a Zadoff-chu (Zadoff-chu, ZC) sequence, or the like. When the guard interval sequence is the Galay sequence, a corresponding PAPR is low. Also, the Galay sequence is simpler.

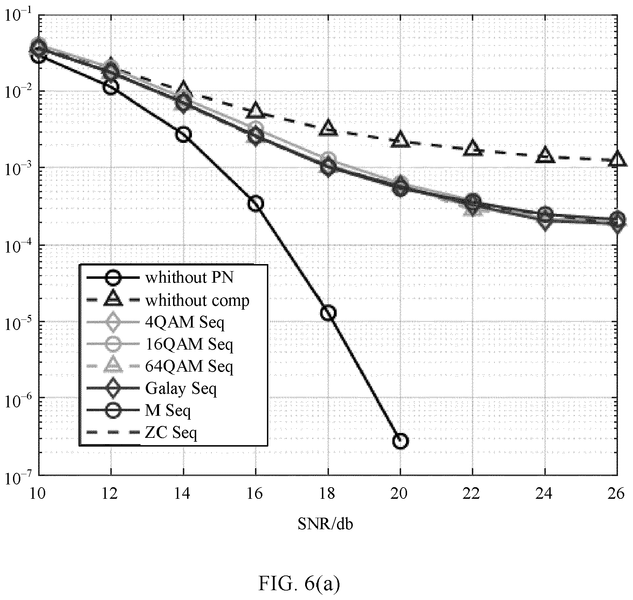

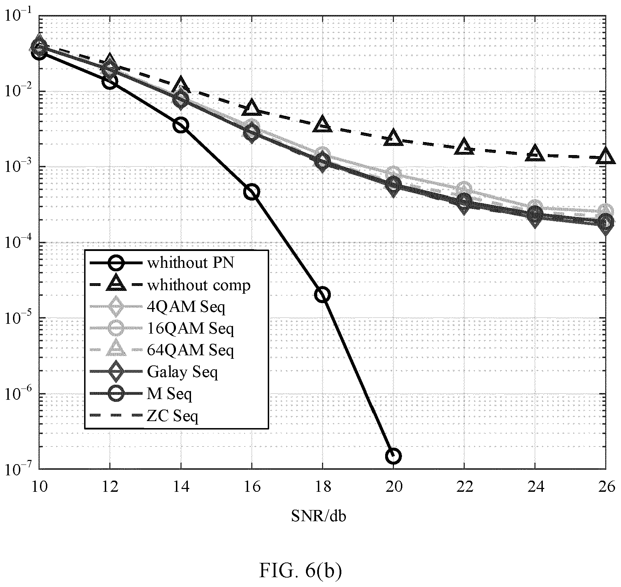

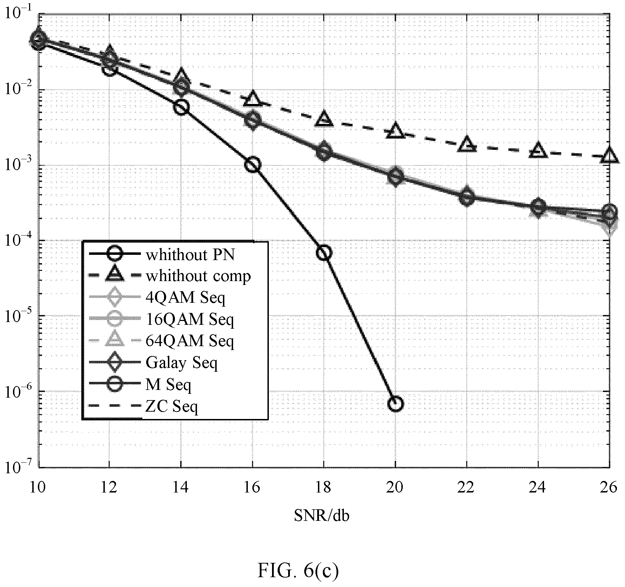

Refer to FIG. 6(a), FIG. 6(b), and FIG. 6(c). FIG. 6(a) is a schematic diagram of simulation results of phase tracking performance of different types of guard interval sequences whose guard interval sequence lengths are 8. FIG. 6(b) is a schematic diagram of simulation results of phase tracking of different types of guard interval sequences whose guard interval sequence lengths are 16. FIG. 6(c) is a schematic diagram of simulation results of phase tracking of different types of guard interval sequences whose guard interval sequence lengths are 32. It can be learned from FIG. 6(a), FIG. 6(b), and FIG. 6(c) that phase tracking performance may also be referred to as a phase compensation effect, and refers to a system bit error rate obtained after a phase is compensated by using the foregoing corresponding guard interval sequences when a signal has phase noise.

Case 2: A quantity of channel bondings is 2 (CB = 2), and each resource element corresponds to 256 subcarriers.

When CB = 2, channels in the communication system are two 2.16 GHz (that is, 4.32 GHz), and a spectrum resource of each channel may include eight resource elements (resource block, RB). For division of resource elements, refer to FIG. 4b. Each resource element corresponds to 256 subcarriers. The data and the pilot occupy a total of 1024 subcarriers. In other words, the data and the pilot occupy a bandwidth of 3.52 GHz, and bandwidth occupied by the data and the pilot after inverse fourier transformation is 5.28 GHz. It should be understood that the resource division manner shown in FIG. 4b is merely an example.

Based on the case 2, a length of the guard interval sequence may be classified into three types: short, medium, and long, and corresponding lengths are respectively 16, 32, or 64. A guard interval sequence with a length of 16 may be used when channel condition is good, a guard interval sequence with a length of 32 may be used when the channel condition is normal, and a guard interval sequence with a length of 64 may be used when the channel condition is poor.

In a possible implementation, when a length of the guard interval sequence is 16 or 32, the eight guard interval sequences are eight mutually different and orthogonal sequences. For example, a first sequence is orthogonal to a second sequence, a third sequence is orthogonal to a fourth sequence, a fifth sequence is orthogonal to a sixth sequence, and a seventh sequence is orthogonal to an eighth sequence. When the length of the guard interval sequence is 64, the eight guard interval sequences include five mutually different sequences. For example, the first sequence is orthogonal to the second sequence, the third sequence, the fourth sequence, the fifth sequence, and the sixth sequence are the same, and the seventh sequence is orthogonal to the eighth sequence. The following separately provides an example of eight guard interval sequences whose lengths are 16, eight guard interval sequences whose lengths are 32, eight guard interval sequences whose lengths are 64, and a PAPR corresponding to each sequence.

(d) The eight guard interval sequences whose lengths of the guard interval sequence are 16 and corresponding PAPRs are as follows:
a first sequence is (1, -1, 1, 1, 1, -1, 1, 1, 1, 1, 1, -1, -1, -1, -1, 1), and a PAPR corresponding to the first sequence is 3.3995;
a second sequence is (-1, 1, -1, -1, -1, 1, -1, -1, -1, -1, -1, 1, 1, 1, 1, -1), and a PAPR corresponding to the second sequence is 3.3995;
a third sequence is (1, -1, 1, 1, 1, -1, 1, 1, 1, -1, -1, -1, -1, 1, 1, 1), and a PAPR corresponding to the third sequence is 3.7526;
a fourth sequence is (-1, 1, -1, -1, -1, 1, -1, -1, -1, 1, 1, 1, 1, -1, -1, -1), and a PAPR corresponding to the fourth sequence is 3.7526;
a fifth sequence is (1, -1, 1, -1, -1, 1, 1, -1, -1, -1, 1, 1, 1, 1, 1, 1), and a PAPR corresponding to the fifth sequence is 3.8522;
a sixth sequence is (-1, 1, -1, 1, 1, -1, -1, 1, 1, 1, -1, -1, -1, -1, -1, -1), and a PAPR corresponding to the sixth sequence is 3.8522;
a seventh sequence is (1, -1, -1, -1, 1, -1, 1, 1, 1, -1, -1, -1, -1, 1, -1, -1), and a PAPR corresponding to the seventh sequence is 3.9190; and
an eighth sequence is (-1, 1, 1, 1, -1, 1, -1, -1, -1, 1, 1, 1, 1, -1, 1, 1), and a PAPR corresponding to the eighth sequence is 3.9190.

It may be understood that the eight guard interval sequences whose length is 16 may be all multiplied by -1 or an imaginary number j. In other words, the first sequence to the eighth sequence are all multiplied by -1 or an imaginary number j, to obtain eight new guard interval sequences.

(e) The eight guard interval sequences whose lengths of the guard interval sequence are 32 and corresponding PAPRs are as follows:
a first sequence is (1, 1, 1, 1, -1, 1, -1, 1, 1, 1, -1, -1, -1, 1, 1, -1, -1, 1, 1, -1, 1, 1, -1, -1, -1, 1, -1, 1, 1, 1, 1, 1), and a PAPR corresponding to the first sequence is 4.2365;
a second sequence is (-1, -1, -1, -1, 1, -1, 1, -1, -1, -1, 1, 1, 1, -1, -1, 1, 1, -1, -1, 1, -1, -1, 1, 1, 1, -1, 1, -1, -1, -1, -1, -1), and a PAPR corresponding to the second sequence is 4.2365;
a third sequence is (1, -1, -1, 1, -1, -1, -1, -1, -1, -1, 1, 1, 1, -1, 1, -1, -1, 1, 1, -1, 1, 1, 1, 1, -1, -1, 1, 1, 1, -1, 1, -1), and a PAPR corresponding to the third sequence is 4.2414;
a fourth sequence is (-1, 1, 1, -1, 1, 1, 1, 1, 1, 1, -1, -1, -1, 1, -1, 1, 1, -1, -1, 1, -1, -1, -1, -1, 1, 1, -1, -1, -1, 1, -1, 1), and a PAPR corresponding to the fourth sequence is 4.2414;
a fifth sequence is (1, 1, 1, 1, 1, -1, 1, -1, -1, -1, 1, 1, -1, 1, 1, -1, -1, 1, 1, -1, -1, -1, 1, 1, 1, -1, 1, -1, 1, 1, 1, 1), and a PAPR corresponding to the fifth sequence is 4.2526;
a sixth sequence is (-1, -1, -1, -1, -1, 1, -1, 1, 1, 1, -1, -1, 1, -1, -1, 1, 1, -1, -1, 1, 1, 1, -1, -1, -1, 1, - 1, 1, -1, -1, -1, -1), and a PAPR corresponding to the sixth sequence is 4.2526;
a seventh sequence is (1, -1, 1, 1, -1, 1, 1, 1, 1, -1, 1, 1, -1, 1, 1, 1, 1, -1, 1, 1, 1, -1, -1, -1, -1, 1, -1, -1, -1, 1, 1, 1), and a PAPR corresponding to the seventh sequence is 4.2606; and
an eighth sequence is (-1, 1, -1, -1, 1, -1, -1, -1, -1, 1, -1, -1, 1, -1, -1, -1, -1, 1, -1, -1, -1, 1, 1, 1, 1, -1, 1, 1, 1, -1, -1, -1), and a PAPR corresponding to the eighth sequence is 4.2606.

It may be understood that the eight guard interval sequences whose length is 32 may be all multiplied by -1 or an imaginary number j. In other words, the first sequence to the eighth sequence are all multiplied by -1 or an imaginary number j, to obtain eight new guard interval sequences.

(f) The eight guard interval sequences whose lengths of the guard interval sequence are 64 and corresponding PAPRs are as follows:
a first sequence is (1, -1, -1, 1, -1, -1, -1, -1, -1, -1, 1, 1, 1, -1, 1, -1, -1, 1, 1, -1, 1, 1, 1, 1, 1, 1, -1, -1, -1, 1, -1, 1, 1, -1, -1, 1, -1, -1, -1, -1, 1, 1, -1, -1, -1, 1, -1, 1, 1, -1, -1, 1, -1, -1, -1, -1, 1, 1, -1, -1, -1, 1, -1, 1), and a PAPR corresponding to the first sequence is 4.6981;
a second sequence is (-1, 1, 1, -1, 1, 1, 1, 1, 1, 1, -1, -1, -1, 1, -1, 1, 1, -1, -1, 1, -1, -1, -1, -1, -1, -1, 1, 1, 1, -1, 1, -1, -1, 1, 1, -1, 1, 1, 1, 1, -1, -1, 1, 1, 1, -1, 1, -1, -1, 1, 1, -1, 1, 1, 1, 1, -1, -1, 1, 1, 1, -1, 1, -1), and a PAPR corresponding to the second sequence is 4.6981;
a third sequence is (1, -1, -1, 1, -1, -1, -1, -1, -1, 1, -1, 1, 1, 1, -1, -1, 1, -1, -1, 1, -1, -1, -1, -1, -1, 1, -1, 1, 1, 1, -1, -1, -1, -1, 1, 1, 1, -1, 1, -1, 1, 1, 1, 1, -1, 1, 1, -1, 1, 1, -1, -1, -1, 1, -1, 1, -1, -1, -1, -1, 1, -1, -1, 1), and a PAPR corresponding to the third sequence is 4.7023;
a fourth sequence is (1, -1, -1, 1, -1, -1, -1, -1, -1, 1, -1, 1, 1, 1, -1, -1, 1, -1, -1, 1, -1, -1, -1, -1, -1, 1, -1, 1, 1, 1, -1, -1, -1, -1, 1, 1, 1, -1, 1, -1, 1, 1, 1, 1, -1, 1, 1, -1, 1, 1, -1, -1, -1, 1, -1, 1, -1, -1, -1, -1, 1, -1, - 1, 1), and a PAPR corresponding to the fourth sequence is 4.7023;
a fifth sequence is (-1, 1, 1, -1, 1, 1, 1, 1, 1, -1, 1, -1, -1, -1, 1, 1, -1, 1, 1, -1, 1, 1, 1, 1, 1, -1, 1, -1, -1, -1, 1, 1, 1, 1, -1, -1, -1, 1, -1, 1, -1, -1, -1, -1, 1, -1, -1, 1, -1, -1, 1, 1, 1, -1, 1, -1, 1, 1, 1, 1, -1, 1, 1, -1), and a PAPR corresponding to the fifth sequence is 4.7023;
a sixth sequence is (-1, 1, 1, -1, 1, 1, 1, 1, 1, -1, 1, -1, -1, -1, 1, 1, -1, 1, 1, -1, 1, 1, 1, 1, 1, -1, 1, -1, -1, -1, 1, 1, 1, 1, -1, -1, -1, 1, -1, 1, -1, -1, -1, -1, 1, -1, -1, 1, -1, -1, 1, 1, 1, -1, 1, -1, 1, 1, 1, 1, -1, 1, 1, -1), and a PAPR corresponding to the sixth sequence is 4.7023;
a seventh sequence is (1, -1, 1, -1, 1, 1, 1, 1, 1, -1, 1, -1, 1, 1, 1, 1, 1, 1, -1, -1, 1, -1, -1, 1, 1, 1, -1, -1, 1, -1, -1, 1, 1, -1, -1, 1, 1, 1, -1, -1, -1, 1, 1, -1, -1, -1, 1, 1, 1, 1, 1, 1, 1, -1, 1, -1, -1, -1, -1, -1, -1, 1, -1, 1), and a PAPR corresponding to the seventh sequence is 4.7115; and
an eighth sequence is (-1, 1, -1, 1, -1, -1, -1, -1, -1, 1, -1, 1, -1, -1, -1, -1, -1, -1, 1, 1, -1, 1, 1, -1, -1, -1, 1, 1, -1, 1, 1, -1, -1, 1, 1, -1, -1, -1, 1, 1, 1, -1, -1, 1, 1, 1, -1, -1, -1, -1, -1, -1, -1, 1, -1, 1, 1, 1, 1, 1, 1, -1, 1, -1), and a PAPR corresponding to the eighth sequence is 4.7115.

It may be understood that the eight guard interval sequences whose length is 64 may be all multiplied by -1 or an imaginary number j. In other words, the first sequence to the eighth sequence are all multiplied by -1 or an imaginary number j, to obtain eight new guard interval sequences.

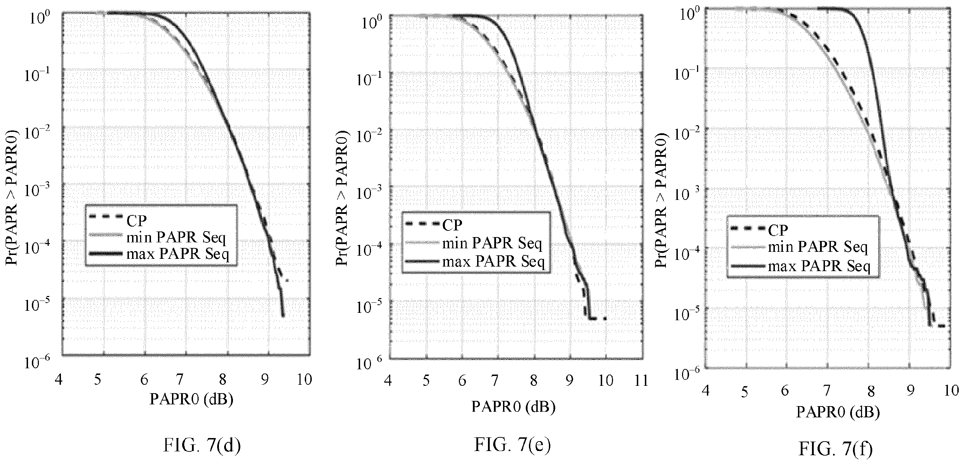

FIG. 7(d), FIG. 7(e), and FIG. 7(f) are schematic diagrams of CCDF curves of PAPRs of three guard interval sequences according to this application. In FIG. 7(d), min PAPR Seq is a schematic diagram of a CCDF curve of a PAPR of the guard interval sequence whose length is 16, and max PAPR Seq is a schematic diagram of a CCDF curve of selecting a PAPR of another guard interval sequence whose length is 16. In FIG. 7(e), min PAPR Seq is a schematic diagram of a CCDF curve of a PAPR of the guard interval sequence whose length is 32, and max PAPR Seq is a schematic diagram of a CCDF curve of selecting a PAPR of another guard interval sequence whose length is 32. In FIG. 7(f), min PAPR Seq is a schematic diagram of a CCDF curve of a PAPR of the guard interval sequence whose length is 64, and max PAPR Seq is a schematic diagram of a CCDF curve of selecting a PAPR of another guard interval sequence whose length is 64. It can be learned that the corresponding guard interval sequence in the foregoing case 1 is used, and the corresponding PAPR is low. It should be understood that a lower PAPR is a better guard interval sequence.

Case 3: A quantity of channel bondings is 3 (CB = 3), and each resource element corresponds to 384 subcarriers.

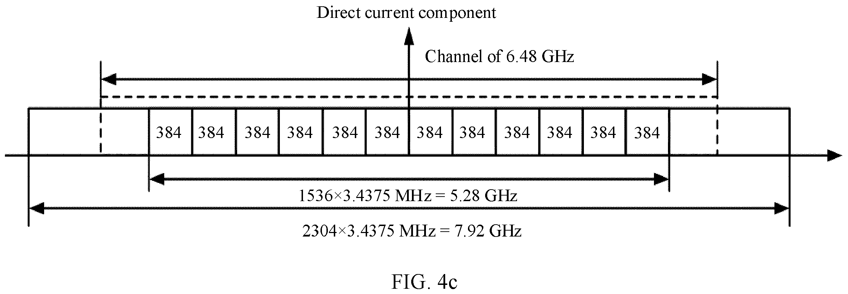

When CB = 3, channels in the communication system are three 2.16 GHz (that is, 6.48 GHz), and a spectrum resource of each channel may include 12 resource elements (resource block, RB). For division of resource elements, refer to FIG. 4c. Each resource element corresponds to 384 subcarriers. The data and the pilot occupy a total of 1536 subcarriers. In other words, the data and the pilot occupy a bandwidth of 5.28 GHz, and bandwidth occupied by the data and the pilot after inverse fourier transformation is 7.92 GHz. It should be understood that the resource division manner shown in FIG. 4b is merely an example.

Based on the case 3, a length of the guard interval sequence may be classified into three types: short, medium, and long, and corresponding lengths are respectively 24, 48, or 96. A guard interval sequence with a length of 24 may be used when channel condition is good, a guard interval sequence with a length of 48 may be used when the channel condition is normal, and a guard interval sequence with a length of 96 may be used when the channel condition is poor.

In a possible implementation, when the length of the guard interval sequence is 24 or 48, the eight guard interval sequences may be eight mutually different sequences. For example, the first sequence, the second sequence, the third sequence, and the fourth sequence are the same, and the fifth sequence, the sixth sequence, the seventh sequence, and the eighth sequence are the same. When the length of the guard interval sequence is 96, the eight guard interval sequences include four mutually different sequences. For example, the first sequence is the same as the second sequence, the third sequence is the same as the fourth sequence, the fifth sequence is the same as the sixth sequence, and the seventh sequence is the same as the eighth sequence. The following separately provides an example of eight guard interval sequences whose lengths are 24, eight guard interval sequences whose lengths are 48, eight guard interval sequences whose lengths are 96, and a PAPR corresponding to each sequence.

(g) The eight guard interval sequences whose lengths of the guard interval sequence are 24 and corresponding PAPRs are as follows:
a first sequence is (1, -1, -1, -1, 1, -1, 1, 1, 0, 0, 0, 0, 1, -1, 1, 1, 1, -1, -1, -1, -1, 1, -1, -1), and a PAPR corresponding to the first sequence is 4.3170;
a second sequence is (1, -1, -1, -1, 1, -1, 1, 1, 0, 0, 0, 0, 1, -1, 1, 1, 1, -1, -1, -1, -1, 1, -1, -1), and a PAPR corresponding to the second sequence is 4.3170;
a third sequence is (1, -1, -1, -1, 1, -1, 1, 1, 0, 0, 0, 0, 1, -1, 1, 1, 1, -1, -1, -1, -1, 1, -1, -1), and a PAPR corresponding to the third sequence is 4.3170;
a fourth sequence is (1, -1, -1, -1, 1, -1, 1, 1, 0, 0, 0, 0, 1, -1, 1, 1, 1, -1, -1, -1, -1, 1, -1, -1), and a PAPR corresponding to the fourth sequence is 4.3170;
a fifth sequence is (1, -1, -1, 1, 1, 1, 1, 1, 0, 0, -1, 1, 0, 0, 1, 1, 1, -1, 1, -1, 1, 1, -1, -1), and a PAPR corresponding to the fifth sequence is 4.5948;
a sixth sequence is (1, -1, -1, 1, 1, 1, 1, 1, 0, 0, -1, 1, 0, 0, 1, 1, 1, -1, 1, -1, 1, 1, -1, -1), and a PAPR corresponding to the sixth sequence is 4.5948;
a seventh sequence is (1, -1, -1, 1, 1, 1, 1, 1, 0, 0, -1, 1, 0, 0, 1, 1, 1, -1, 1, -1, 1, 1, -1, -1), and a PAPR corresponding to the seventh sequence is 4.5948; and
an eighth sequence is (1, -1, -1, 1, 1, 1, 1, 1, 0, 0, -1, 1, 0, 0, 1, 1, 1, -1, 1, -1, 1, 1, -1, -1), and a PAPR corresponding to the eighth sequence is 4.5948.

It may be understood that the eight guard interval sequences whose length is 24 may be all multiplied by -1 or an imaginary number j. In other words, the first sequence to the eighth sequence are all multiplied by -1 or an imaginary number j, to obtain eight new guard interval sequences.

(h) The eight guard interval sequences whose lengths of the guard interval sequence are 48 and corresponding PAPRs are as follows:
a first sequence is (1, -1, -1, -1, 1, -1, 1, 1, -1, -1, 1, -1, -1, -1, -1, 1, 0, 0, 0, 0, 0, 0, 0, 0, -1, -1, 1, -1, -1, -1, -1, 1, 1, -1, -1, -1, 1, -1, 1, 1, 1, 1, -1, 1, 1, 1, 1, -1), and a PAPR corresponding to the first sequence is 4.8055;
a second sequence is (1, -1, -1, -1, 1, -1, 1, 1, -1, -1, 1, -1, -1, -1, -1, 1, 0, 0, 0, 0, 0, 0, 0, 0, -1, -1, 1, - 1, -1, -1, -1, 1, 1, -1, -1, -1, 1, -1, 1, 1, 1, 1, -1, 1, 1, 1, 1, -1), and a PAPR corresponding to the second sequence is 4.8055;
a third sequence is (1, -1, 1, -1, -1, -1, -1, -1, -1, -1, 1, 1, 1, -1, -1, 1, 0, 0, 0, 0, -1, -1, -1, -1, 0, 0, 0, 0, 1, -1, -1, 1, 1, -1, 1, -1, 1, 1, 1, 1, -1, -1, 1, 1, -1, 1, 1, -1), and a PAPR corresponding to the third sequence is 4.9753;
a fourth sequence is (1, -1, 1, -1, -1, -1, -1, -1, -1, -1, 1, 1, 1, -1, -1, 1, 0, 0, 0, 0, -1, -1, -1, -1, 0, 0, 0, 0, 1, -1, -1, 1, 1, -1, 1, -1, 1, 1, 1, 1, -1, -1, 1, 1, -1, 1, 1, -1), and a PAPR corresponding to the fourth sequence is 4.9753;
a fifth sequence is (1, 1, 1, -1, 1, -1, 1, 1, -1, -1, 1, -1, -1, 1, 1, 1, 0, 0, 0, 0, 0, 0, 0, 0, -1, -1, 1, -1, -1, 1, 1, 1, 1, 1, 1, -1, 1, -1, 1, 1, 1, 1, -1, 1, 1, -1, -1, -1), and a PAPR corresponding to the fifth sequence is 5.0248;
a sixth sequence is (1, 1, 1, -1, 1, -1, 1, 1, -1, -1, 1, -1, -1, 1, 1, 1, 0, 0, 0, 0, 0, 0, 0, 0, -1, -1, 1, -1, -1, 1, 1, 1, 1, 1, 1, -1, 1, -1, 1, 1, 1, 1, -1, 1, 1, -1, -1, -1), and a PAPR corresponding to the sixth sequence is 5.0248;
a seventh sequence is (1, -1, 1, -1, 1, 1, 1, 1, 1, 1, -1, -1, 1, -1, -1, 1, 0, 0, 0, 0, 1, 1, 1, 1, 0, 0, 0, 0, 1, -1, -1, 1, 1, -1, 1, -1, -1, -1, -1, -1, 1, 1, -1, -1, -1, 1, 1, -1), and a PAPR corresponding to the seventh sequence is 5.0260; and
an eighth sequence is (1, -1, 1, -1, 1, 1, 1, 1, 1, 1, -1, -1, 1, -1, -1, 1, 0, 0, 0, 0, 1, 1, 1, 1, 0, 0, 0, 0, 1, -1, -1, 1, 1, -1, 1, -1, -1, -1, -1, -1, 1, 1, -1, -1, -1, 1, 1, -1), and a PAPR corresponding to the eighth sequence is 5.0260.

It may be understood that the eight guard interval sequences whose length is 48 may be all multiplied by -1 or an imaginary number j. In other words, the first sequence to the eighth sequence are all multiplied by -1 or an imaginary number j, to obtain eight new guard interval sequences.

(i) The eight guard interval sequences whose lengths of the guard interval sequence are 96 and corresponding PAPRs are as follows:
a first sequence is (1, -1, 1, -1, -1, -1, -1, -1, 1, -1, 1, -1, 1, 1, 1, 1, 1, 1, -1, -1, -1, 1, 1, -1, 1, 1, -1, -1, 1, -1, -1, 1, 0, 0, 0, 0, 0, 0, 0, 0, 1, -1, 1, -1, 1, 1, 1, 1, 0, 0, 0, 0, 0, 0, 0, 0, 1, 1, -1, -1, 1, -1, -1, 1, 1, -1, 1, -1, -1, - 1, -1, -1, -1, 1, -1, 1, -1, -1, -1, -1, 1, 1, -1, -1, -1, 1, 1, -1, -1, -1, 1, 1, -1, 1, 1, -1), and a PAPR corresponding to the first sequence is 5.3270;
a second sequence is (1, -1, 1, -1, -1, -1, -1, -1, 1, -1, 1, -1, 1, 1, 1, 1, 1, 1, -1, -1, -1, 1, 1, -1, 1, 1, -1, -1, 1, -1, -1, 1, 0, 0, 0, 0, 0, 0, 0, 0, 1, -1, 1, -1, 1, 1, 1, 1, 0, 0, 0, 0, 0, 0, 0, 0, 1, 1, -1, -1, 1, -1, -1, 1, 1, -1, 1, -1, - 1, -1, -1, -1, -1, 1, -1, 1, -1, -1, -1, -1, 1, 1, -1, -1, -1, 1, 1, -1, -1, -1, 1, 1, -1, 1, 1, -1), and a PAPR corresponding to the second sequence is 5.3270;
a third sequence is (1, 1, -1, 1, 1, 1, 1, -1, -1, 1, 1, 1, -1, 1, -1, -1, 1, 1, -1, 1, -1, -1, -1, 1, -1, 1, 1, 1, 1, -1, 1, 1, 0, 0, 0, 0, 0, 0, 0, 0, -1, 1, 1, 1, -1, 1, -1, -1, 0, 0, 0, 0, 0, 0, 0, 0, -1, 1, 1, 1, 1, -1, 1, 1, 1, 1, -1, 1, 1, 1, 1, - 1, 1, -1, -1, -1, 1, -1, 1, 1, 1, 1, -1, 1, -1, -1, -1, 1, 1, -1, -1, -1, -1, 1, -1, -1), and a PAPR corresponding to the third sequence is 5.3776;
a fourth sequence is (1, 1, -1, 1, 1, 1, 1, -1, -1, 1, 1, 1, -1, 1, -1, -1, 1, 1, -1, 1, -1, -1, -1, 1, -1, 1, 1, 1, 1, -1, 1, 1, 0, 0, 0, 0, 0, 0, 0, 0, -1, 1, 1, 1, -1, 1, -1, -1, 0, 0, 0, 0, 0, 0, 0, 0, -1, 1, 1, 1, 1, -1, 1, 1, 1, 1, -1, 1, 1, 1, 1, -1, 1, -1, -1, -1, 1, -1, 1, 1, 1, 1, -1, 1, -1, -1, -1, 1, 1, -1, -1, -1, -1, 1, -1, -1), and a PAPR corresponding to the fourth sequence is 5.3776;
a fifth sequence is (1, -1, -1, -1, -1, 1, -1, -1, 1, 1, -1, 1, -1, -1, -1, 1, -1, 1, 1, 1, -1, 1, -1, -1, -1, -1, 1, -1, -1, -1, -1, 1, 0, 0, 0, 0, 0, 0, 0, 0, 1, 1, -1, 1, -1, -1, -1, 1, 0, 0, 0, 0, 0, 0, 0, 0, -1, -1, 1, -1, -1, -1, -1, 1, 1, -1, - 1, -1, -1, 1, -1, -1, -1, -1, 1, -1, 1, 1, 1, -1, -1, 1, 1, 1, -1, 1, -1, -1, 1, 1, -1, 1, 1, 1, 1, -1), and a PAPR corresponding to the fifth sequence is 5.4026;
a sixth sequence is (1, -1, -1, -1, -1, 1, -1, -1, 1, 1, -1, 1, -1, -1, -1, 1, -1, 1, 1, 1, -1, 1, -1, -1, -1, -1, 1, -1, -1, -1, -1, 1, 0, 0, 0, 0, 0, 0, 0, 0, 1, 1, -1, 1, -1, -1, -1, 1, 0, 0, 0, 0, 0, 0, 0, 0, -1, -1, 1, -1, -1, -1, -1, 1, 1, - 1, -1, -1, -1, 1, -1, -1, -1, -1, 1, -1, 1, 1, 1, -1, -1, 1, 1, 1, -1, 1, -1, -1, 1, 1, -1, 1, 1, 1, 1, -1), and a PAPR corresponding to the sixth sequence is 5.4026;
a seventh sequence is (1, 1, 1, -1, -1, -1, -1, 1, -1, 1, -1, -1, -1, 1, -1, -1, 1, 1, -1, 1, -1, -1, 1, -1, -1, 1, 1, 1, -1, 1, 1, 1, 0, 0, 0, 0, -1, -1, -1, 1, 0, 0, 0, 0, -1, 1, -1, -1, 0, 0, 0, 0, -1, -1, 1, -1, 0, 0, 0, 0, -1, 1, 1, 1, 1, 1, 1, - 1, 1, 1, 1, -1, -1, 1, -1, -1, 1, -1, 1, 1, 1, 1, -1, 1, 1, 1, -1, 1, -1, 1, 1, 1, 1, -1, -1, -1), and a PAPR corresponding to the seventh sequence is 5.4270; and
an eighth sequence is (1, 1, 1, -1, -1, -1, -1, 1, -1, 1, -1, -1, -1, 1, -1, -1, 1, 1, -1, 1, -1, -1, 1, -1, -1, 1, 1, 1, -1, 1, 1, 1, 0, 0, 0, 0, -1, -1, -1, 1, 0, 0, 0, 0, -1, 1, -1, -1, 0, 0, 0, 0, -1, -1, 1, -1, 0, 0, 0, 0, -1, 1, 1, 1, 1, 1, 1, - 1, 1, 1, 1, -1, -1, 1, -1, -1, 1, -1, 1, 1, 1, 1, -1, 1, 1, 1, -1, 1, -1, 1, 1, 1, 1, -1, -1, -1), and a PAPR corresponding to the eighth sequence is 5.4270.

It may be understood that the eight guard interval sequences whose length is 96 may be all multiplied by -1 or an imaginary number j. In other words, the first sequence to the eighth sequence are all multiplied by -1 or an imaginary number j, to obtain eight new guard interval sequences.

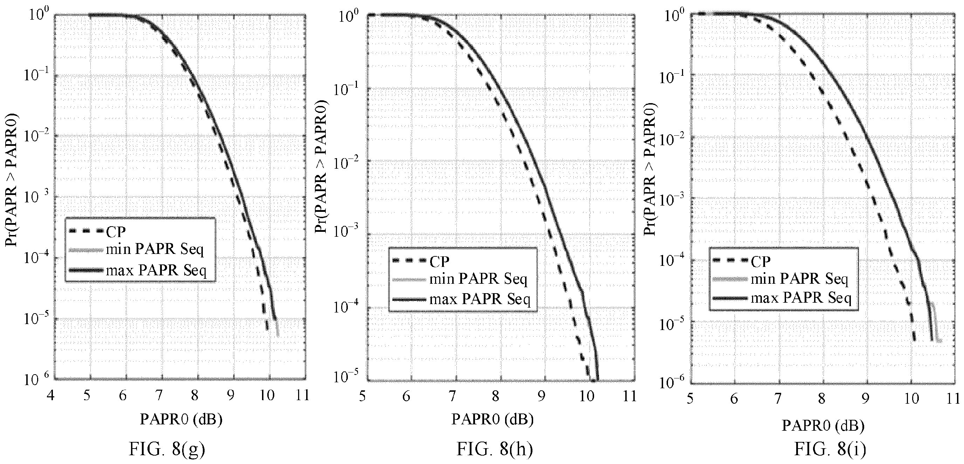

FIG. 8(g), FIG. 8(h), and FIG. 8(i) are schematic diagrams of CCDF curves of PAPRs of three guard interval sequences according to this application. In FIG. 8(g), min PAPR Seq is a schematic diagram of a CCDF curve of a PAPR of the guard interval sequence whose length is 24, and max PAPR Seq is a schematic diagram of a CCDF curve of selecting a PAPR of another guard interval sequence whose length is 24. In FIG. 8(h), min PAPR Seq is a schematic diagram of a CCDF curve of a PAPR of the guard interval sequence whose length is 48, and max PAPR Seq is a schematic diagram of a CCDF curve of selecting a PAPR of another guard interval sequence whose length is 48. In FIG. 8(i), min PAPR Seq is a schematic diagram of a CCDF curve of a PAPR of the guard interval sequence whose length is 96, and max PAPR Seq is a schematic diagram of a CCDF curve of selecting a PAPR of another guard interval sequence whose length is 96. It can be learned that the corresponding guard interval sequence in the foregoing case 1 is used, and the corresponding PAPR is low. It should be understood that a lower PAPR is a better guard interval sequence.

Case 4: A quantity of channel bondings is 4 (CB = 4), and each resource element corresponds to 512 subcarriers.

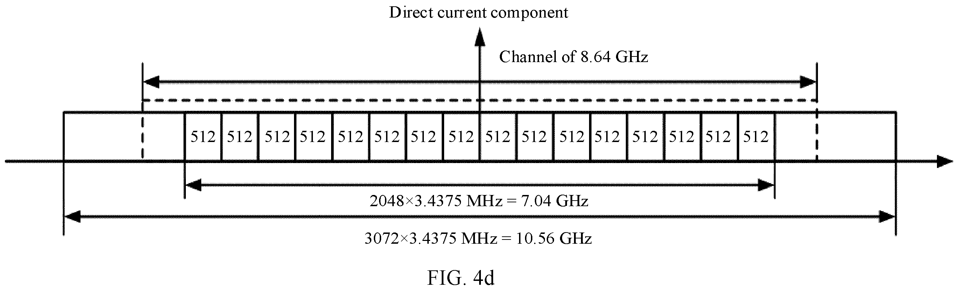

When CB = 4, channels in the communication system are four 2.16 GHz (that is, 8.64 GHz), and a spectrum resource of each channel may include 16 resource elements (resource block, RB). For division of resource elements, refer to FIG. 4d. Each resource element corresponds to 512 subcarriers. The data and the pilot occupy a total of 2048 subcarriers. In other words, the data and the pilot occupy a bandwidth of 7.04 GHz, and bandwidth occupied by the data and the pilot after inverse fourier transformation is 10.56 GHz. It should be understood that the resource division manner shown in FIG. 4d is merely an example.

Based on the case 4, a length of the guard interval sequence may be classified into three types: short, medium, and long, and corresponding lengths are respectively 32, 64, or 128. A guard interval sequence with a length of 32 may be used when channel condition is good, a guard interval sequence with a length of 64 may be used when the channel condition is normal, and a guard interval sequence with a length of 128 may be used when the channel condition is poor.

In a possible implementation, when a length of the guard interval sequence is 32 or 128, the eight guard interval sequences are eight mutually different and orthogonal sequences. For example, a first sequence is orthogonal to a second sequence, a third sequence is orthogonal to a fourth sequence, a fifth sequence is orthogonal to a sixth sequence, and a seventh sequence is orthogonal to an eighth sequence. When the length of the guard interval sequence is 64, the eight guard interval sequences include five mutually different sequences. For example, the first sequence is orthogonal to the second sequence, the third sequence, the fourth sequence, the fifth sequence, and the sixth sequence are the same, and the seventh sequence is orthogonal to the eighth sequence. The following separately provides an example of eight guard interval sequences whose lengths are 32, eight guard interval sequences whose lengths are 64, eight guard interval sequences whose lengths are 128, and a PAPR corresponding to each sequence.

(j) The eight guard interval sequences whose lengths of the guard interval sequence are 32 and corresponding PAPRs are as follows:
a first sequence is (1, -1, 1, -1, -1, -1, -1, -1, -1, 1, -1, 1, -1, -1, -1, -1, -1, -1, 1, 1, 1, -1, -1, 1, 1, 1, - 1, -1, 1, -1, -1, 1), and a PAPR corresponding to the first sequence is 4.1274;
a second sequence is (-1, 1, -1, 1, 1, 1, 1, 1, 1, -1, 1, -1, 1, 1, 1, 1, 1, 1, -1, -1, -1, 1, 1, -1, -1, -1, 1, 1, - 1, 1, 1, -1), and a PAPR corresponding to the second sequence is 4.1274;
a third sequence is (1, 1, 1, 1, 1, -1, 1, -1, -1, -1, 1, 1, -1, 1, 1, -1, -1, 1, 1, -1, -1, -1, 1, 1, 1, -1, 1, -1, 1, 1, 1, 1), and a PAPR corresponding to the third sequence is 4.1659;
a fourth sequence is (-1, -1, -1, -1, -1, 1, -1, 1, 1, 1, -1, -1, 1, -1, -1, 1, 1, -1, -1, 1, 1, 1, -1, -1, -1, 1, -1, 1, -1, -1, -1, -1), and a PAPR corresponding to the fourth sequence is 4.1659;
a fifth sequence is (1, -1, -1, -1, 1, -1, 1, 1, -1, -1, 1, -1, -1, -1, -1, 1, 1, -1, -1, -1, 1, -1, 1, 1, 1, 1, -1, 1, 1, 1, 1, -1), and a PAPR corresponding to the fifth sequence is 4.1748;
a sixth sequence is (-1, 1, 1, 1, -1, 1, -1, -1, 1, 1, -1, 1, 1, 1, 1, -1, -1, 1, 1, 1, -1, 1, -1, -1, -1, -1, 1, -1, -1, -1, -1, 1), and a PAPR corresponding to the sixth sequence is 4.1748;
a seventh sequence is (1, 1, 1, 1, 1, -1, 1, -1, -1, -1, 1, 1, 1, -1, -1, 1, 1, -1, 1, -1, 1, 1, 1, 1, -1, 1, 1, -1, 1, 1, -1, -1), and a PAPR corresponding to the seventh sequence is 4.1976; and
an eighth sequence is (-1, -1, -1, -1, -1, 1, -1, 1, 1, 1, -1, -1, -1, 1, 1, -1, -1, 1, -1, 1, -1, -1, -1, -1, 1, -1, -1, 1, -1, -1, 1, 1), and a PAPR corresponding to the eighth sequence is 4.1976.

It may be understood that the eight guard interval sequences whose length is 32 may be all multiplied by -1 or an imaginary number j. In other words, the first sequence to the eighth sequence are all multiplied by -1 or an imaginary number j, to obtain eight new guard interval sequences.

(k) The eight guard interval sequences whose lengths of the guard interval sequence are 64 and corresponding PAPRs are as follows:
a first sequence is (1, -1, 1, -1, -1, -1, -1, -1, -1, 1, -1, 1, 1, 1, 1, 1, 1, -1, 1, -1, 1, 1, 1, 1, 1, -1, 1, -1, 1, 1, 1, 1, 1, 1, -1, -1, -1, 1, 1, -1, -1, -1, 1, 1, 1, -1, -1, 1, 1, 1, -1, -1, 1, -1, -1, 1, 1, 1, -1, -1, 1, -1, -1, 1), and a PAPR corresponding to the first sequence is 4.5507;
a second sequence is (-1, 1, -1, 1, 1, 1, 1, 1, 1, -1, 1, -1, -1, -1, -1, -1, -1, 1, -1, 1, -1, -1, -1, -1, -1, 1, -1, 1, -1, -1, -1, -1, -1, -1, 1, 1, 1, -1, -1, 1, 1, 1, -1, -1, -1, 1, 1, -1, -1, -1, 1, 1, -1, 1, 1, -1, -1, -1, 1, 1, -1, 1, 1, -1), and a PAPR corresponding to the second sequence is 4.5507;
a third sequence is (1, -1, -1, 1, -1, -1, -1, -1, -1, 1, -1, 1, 1, 1, -1, -1, 1, -1, -1, 1, -1, -1, -1, -1, -1, 1, -1, 1, 1, 1, -1, -1, -1, -1, 1, 1, 1, -1, 1, -1, 1, 1, 1, 1, -1, 1, 1, -1, 1, 1, -1, -1, -1, 1, -1, 1, -1, -1, -1, -1, 1, -1, -1, 1), and a PAPR corresponding to the third sequence is 4.5704;
a fourth sequence is (1, -1, -1, 1, -1, -1, -1, -1, -1, 1, -1, 1, 1, 1, -1, -1, 1, -1, -1, 1, -1, -1, -1, -1, -1, 1, -1, 1, 1, 1, -1, -1, -1, -1, 1, 1, 1, -1, 1, -1, 1, 1, 1, 1, -1, 1, 1, -1, 1, 1, -1, -1, -1, 1, -1, 1, -1, -1, -1, -1, 1, -1, - 1, 1), and a PAPR corresponding to the fourth sequence is 4.5704; a fifth sequence is (-1, 1, 1, -1, 1, 1, 1, 1, 1, -1, 1, -1, -1, -1, 1, 1, -1, 1, 1, -1, 1, 1, 1, 1, 1, -1, 1, -1, -1, -1, 1, 1, 1, 1, -1, -1, -1, 1, -1, 1, -1, -1, -1, -1, 1, -1, -1, 1, - 1, -1, 1, 1, 1, -1, 1, -1, 1, 1, 1, 1, -1, 1, 1, -1), and a PAPR corresponding to the fifth sequence is 4.5704;
a sixth sequence is (-1, 1, 1, -1, 1, 1, 1, 1, 1, -1, 1, -1, -1, -1, 1, 1, -1, 1, 1, -1, 1, 1, 1, 1, 1, -1, 1, -1, -1, -1, 1, 1, 1, 1, -1, -1, -1, 1, -1, 1, -1, -1, -1, -1, 1, -1, -1, 1, -1, -1, 1, 1, 1, -1, 1, -1, 1, 1, 1, 1, -1, 1, 1, -1), and a PAPR corresponding to the sixth sequence is 4.5704;
a seventh sequence is (1, -1, 1, -1, -1, -1, 1, 1, -1, -1, -1, -1, 1, -1, -1, 1, 1, -1, 1, -1, -1, -1, 1, 1, -1, - 1, -1, -1, 1, -1, -1, 1, 1, -1, 1, -1, -1, -1, 1, 1, 1, 1, 1, 1, -1, 1, 1, -1, -1, 1, -1, 1, 1, 1, -1, -1, -1, -1, -1, -1, 1, -1, - 1, 1), and a PAPR corresponding to the seventh sequence is 4.5812; and
an eighth sequence is (-1, 1, -1, 1, 1, 1, -1, -1, 1, 1, 1, 1, -1, 1, 1, -1, -1, 1, -1, 1, 1, 1, -1, -1, 1, 1, 1, 1, -1, 1, 1, -1, -1, 1, -1, 1, 1, 1, -1, -1, -1, -1, -1, -1, 1, -1, -1, 1, 1, -1, 1, -1, -1, -1, 1, 1, 1, 1, 1, 1, -1, 1, 1, -1), and a PAPR corresponding to the eighth sequence is 4.5812.

It may be understood that the eight guard interval sequences whose length is 64 may be all multiplied by -1 or an imaginary number j. In other words, the first sequence to the eighth sequence are all multiplied by -1 or an imaginary number j, to obtain eight new guard interval sequences.

(1) The eight guard interval sequences whose length is 128 and corresponding PAPRs are as follows:
a first sequence is (1, -1, -1, -1, 1, -1, 1, 1, 1, 1, -1, 1, 1, 1, 1, -1, 1, -1, -1, -1, 1, -1, 1, 1, 1, 1, -1, 1, 1, 1, 1, -1, -1, 1, 1, 1, -1, 1, -1, -1, 1, 1, -1, 1, 1, 1, 1, -1, 1, -1, -1, -1, 1, -1, 1, 1, -1, -1, 1, -1, -1, -1, -1, 1, -1, 1, 1, 1, -1, 1, -1, -1, -1, -1, 1, -1, -1, -1, -1, 1, 1, -1, -1, -1, 1, -1, 1, 1, 1, 1, -1, 1, 1, 1, 1, -1, 1, -1, -1, -1, 1, -1, 1, 1, - 1, -1, 1, -1, -1, -1, -1, 1, 1, -1, -1, -1, 1, -1, 1, 1, -1, -1, 1, -1, -1, -1, -1, 1), and a PAPR corresponding to the first sequence is 4.8524;
a second sequence is (-1, 1, 1, 1, -1, 1, -1, -1, -1, -1, 1, -1, -1, -1, -1, 1, -1, 1, 1, 1, -1, 1, -1, -1, -1, - 1, 1, -1, -1, -1, -1, 1, 1, -1, -1, -1, 1, -1, 1, 1, -1, -1, 1, -1, -1, -1, -1, 1, -1, 1, 1, 1, -1, 1, -1, -1, 1, 1, -1, 1, 1, 1, 1, -1, 1, -1, -1, -1, 1, -1, 1, 1, 1, 1, -1, 1, 1, 1, 1, -1, -1, 1, 1, 1, -1, 1, -1, -1, -1, -1, 1, -1, -1, -1, -1, 1, -1, 1, 1, 1, -1, 1, -1, -1, 1, 1, -1, 1, 1, 1, 1, -1, -1, 1, 1, 1, -1, 1, -1, -1, 1, 1, -1, 1, 1, 1, 1, -1), and a PAPR corresponding to the second sequence is 4.8524;
a third sequence is (1, -1, -1, -1, 1, -1, 1, 1, 1, 1, -1, 1, 1, 1, 1, -1, 1, -1, -1, -1, 1, -1, 1, 1, -1, -1, 1, -1, -1, -1, -1, 1, 1, -1, -1, -1, -1, 1, -1, -1, 1, 1, -1, 1, -1, -1, -1, 1, 1, -1, -1, -1, -1, 1, -1, -1, -1, -1, 1, -1, 1, 1, 1, - 1, -1, 1, 1, 1, -1, 1, -1, -1, -1, -1, 1, -1, -1, -1, -1, 1, 1, -1, -1, -1, 1, -1, 1, 1, -1, -1, 1, -1, -1, -1, -1, 1, -1, 1, 1, 1, 1, -1, 1, 1, -1, -1, 1, -1, 1, 1, 1, -1, 1, -1, -1, -1, -1, 1, -1, -1, -1, -1, 1, -1, 1, 1, 1, -1), and a PAPR corresponding to the third sequence is 4.8647;
a fourth sequence is (-1, 1, 1, 1, -1, 1, -1, -1, -1, -1, 1, -1, -1, -1, -1, 1, -1, 1, 1, 1, -1, 1, -1, -1, 1, 1, - 1, 1, 1, 1, 1, -1, -1, 1, 1, 1, 1, -1, 1, 1, -1, -1, 1, -1, 1, 1, 1, -1, -1, 1, 1, 1, 1, -1, 1, 1, 1, 1, -1, 1, -1, -1, -1, 1, 1, -1, -1, -1, 1, -1, 1, 1, 1, 1, -1, 1, 1, 1, 1, -1, -1, 1, 1, 1, -1, 1, -1, -1, 1, 1, -1, 1, 1, 1, 1, -1, 1, -1, -1, -1, -1, 1, -1, -1, 1, 1, -1, 1, -1, -1, -1, 1, -1, 1, 1, 1, 1, -1, 1, 1, 1, 1, -1, 1, -1, -1, -1, 1), and a PAPR corresponding to the fourth sequence is 4.8647;
a fifth sequence is (1, -1, -1, -1, 1, -1, 1, 1, 1, 1, -1, 1, 1, 1, 1, -1, 1, -1, -1, -1, 1, -1, 1, 1, -1, -1, 1, -1, -1, -1, -1, 1, -1, 1, 1, 1, 1, -1, 1, 1, -1, -1, 1, -1, 1, 1, 1, -1, -1, 1, 1, 1, 1, -1, 1, 1, 1, 1, -1, 1, -1, -1, -1, 1, 1, -1, - 1, -1, 1, -1, 1, 1, 1, 1, -1, 1, 1, 1, 1, -1, 1, -1, -1, -1, 1, -1, 1, 1, -1, -1, 1, -1, -1, -1, -1, 1, 1, -1, -1, -1, -1, 1, -1, - 1, 1, 1, -1, 1, -1, -1, -1, 1, 1, -1, -1, -1, -1, 1, -1, -1, -1, -1, 1, -1, 1, 1, 1, -1), and a PAPR corresponding to the fifth sequence is 4.9206;
a sixth sequence is (-1, 1, 1, 1, -1, 1, -1, -1, -1, -1, 1, -1, -1, -1, -1, 1, -1, 1, 1, 1, -1, 1, -1, -1, 1, 1, -1, 1, 1, 1, 1, -1, 1, -1, -1, -1, -1, 1, -1, -1, 1, 1, -1, 1, -1, -1, -1, 1, 1, -1, -1, -1, -1, 1, -1, -1, -1, -1, 1, -1, 1, 1, 1, - 1, -1, 1, 1, 1, -1, 1, -1, -1, -1, -1, 1, -1, -1, -1, -1, 1, -1, 1, 1, 1, -1, 1, -1, -1, 1, 1, -1, 1, 1, 1, 1, -1, -1, 1, 1, 1, 1, - 1, 1, 1, -1, -1, 1, -1, 1, 1, 1, -1, -1, 1, 1, 1, 1, -1, 1, 1, 1, 1, -1, 1, -1, -1, -1, 1), and a PAPR corresponding to the sixth sequence is 4.9206;
a seventh sequence is (1, -1, -1, -1, 1, -1, 1, 1, 1, 1, -1, 1, 1, 1, 1, -1, 1, -1, -1, -1, 1, -1, 1, 1, -1, -1, 1, -1, -1, -1, -1, 1, -1, 1, 1, 1, 1, -1, 1, 1, -1, -1, 1, -1, 1, 1, 1, -1, -1, 1, 1, 1, 1, -1, 1, 1, 1, 1, -1, 1, -1, -1, -1, 1, 1, - 1, -1, -1, 1, -1, 1, 1, 1, 1, -1, 1, 1, 1, 1, -1, -1, 1, 1, 1, -1, 1, -1, -1, 1, 1, -1, 1, 1, 1, 1, -1, -1, 1, 1, 1, 1, -1, 1, 1, -1, -1, 1, -1, 1, 1, 1, -1, 1, -1, -1, -1, -1, 1, -1, -1, -1, -1, 1, -1, 1, 1, 1, -1), and a PAPR corresponding to the seventh sequence is 4.9878; and
an eighth sequence is (-1, 1, 1, 1, -1, 1, -1, -1, -1, -1, 1, -1, -1, -1, -1, 1, -1, 1, 1, 1, -1, 1, -1, -1, 1, 1, -1, 1, 1, 1, 1, -1, 1, -1, -1, -1, -1, 1, -1, -1, 1, 1, -1, 1, -1, -1, -1, 1, 1, -1, -1, -1, -1, 1, -1, -1, -1, -1, 1, -1, 1, 1, 1, -1, -1, 1, 1, 1, -1, 1, -1, -1, -1, -1, 1, -1, -1, -1, -1, 1, 1, -1, -1, -1, 1, -1, 1, 1, -1, -1, 1, -1, -1, -1, -1, 1, 1, -1, -1, -1, -1, 1, -1, -1, 1, 1, -1, 1, -1, -1, -1, 1, -1, 1, 1, 1, 1, -1, 1, 1, 1, 1, -1, 1, -1, -1, -1, 1), and a PAPR corresponding to the eighth sequence is 4.9878.

It may be understood that the eight guard interval sequences whose length is 128 may be all multiplied by -1 or an imaginary number j. In other words, the first sequence to the eighth sequence are all multiplied by -1 or an imaginary number j, to obtain eight new guard interval sequences.

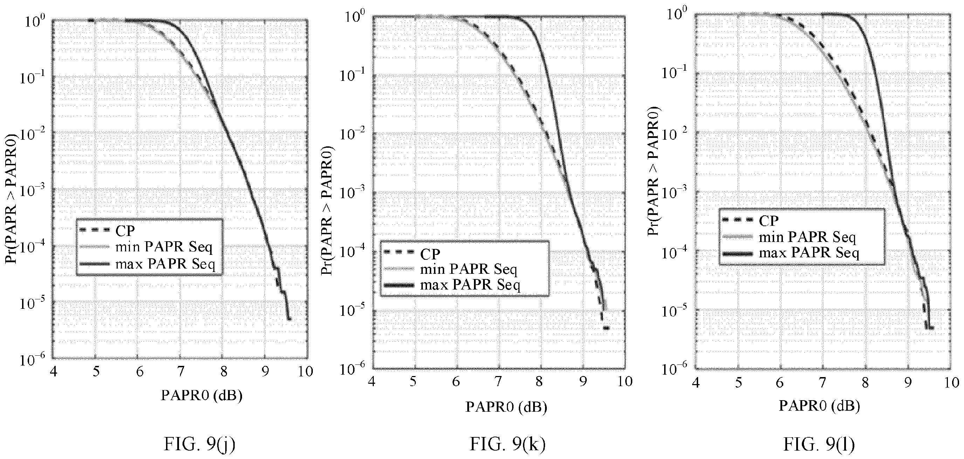

FIG. 9(j), FIG. 9(k), and FIG. 9(1) are schematic diagrams of CCDF curves of PAPRs of three guard interval sequences according to this application. In FIG. 9(j), min PAPR Seq is a schematic diagram of a CCDF curve of a PAPR of the guard interval sequence whose length is 32, and max PAPR Seq is a schematic diagram of a CCDF curve of selecting a PAPR of another guard interval sequence whose length is 32. In FIG. 9(k), min PAPR Seq is a schematic diagram of a CCDF curve of a PAPR of the guard interval sequence whose length is 64, and max PAPR Seq is a schematic diagram of a CCDF curve of selecting a PAPR of another guard interval sequence whose length is 64. In FIG. 9(1), min PAPR Seq is a schematic diagram of a CCDF curve of a PAPR of the guard interval sequence whose length is 128, and max PAPR Seq is a schematic diagram of a CCDF curve of selecting a PAPR of another guard interval sequence whose length is 128. It can be learned that the corresponding guard interval sequence in the foregoing case 1 is used, and the corresponding PAPR is low. It should be understood that a lower PAPR is a better guard interval sequence.

It should be noted that the sequence of the guard interval sequence is merely an example, and the guard interval sequence is not limited in this application. For example, when eight spatial streams are transmitted, eight guard interval sequences are required. For another example, when five spatial streams are transmitted, five guard interval sequences are required. For the five spatial streams, first five guard interval sequences may be used, last five guard interval sequences may be used, or five guard interval sequences may be randomly selected. It may be understood that PAPRs corresponding to the first five guard interval sequences are low.

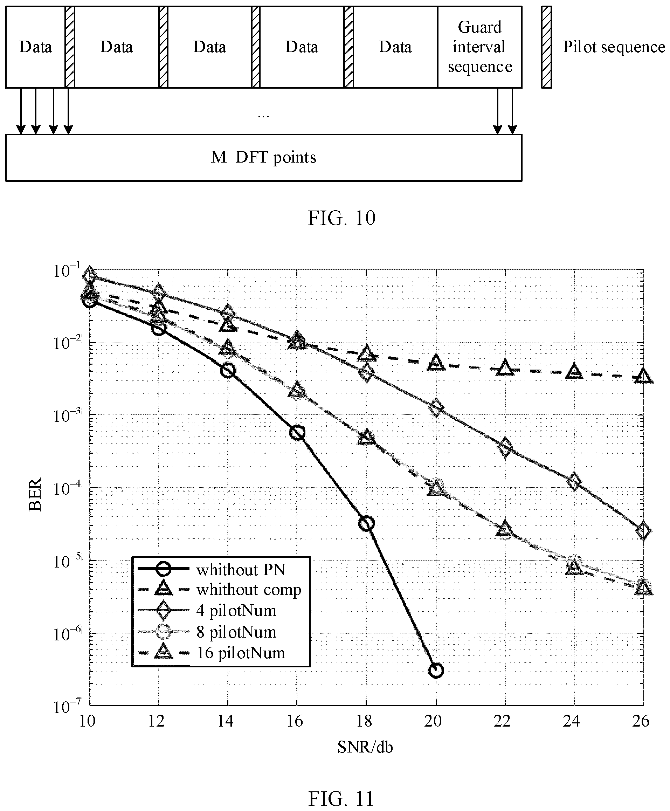

In this application, a pilot symbol may be further inserted into a data symbol of a signal, to further enhance phase tracking performance. For example, after phase noise is first determined by using the foregoing guard interval sequence, phase noise may be calculated and compensated again by using a pilot sequence in data. FIG. 10 is a schematic diagram of a mapping between a data symbol, a pilot symbol, and a guard interval sequence according to this application. As shown in FIG. 10, four pilot symbols are evenly distributed in data symbols. It should be understood that location of the pilot symbol may be flexibly adjusted based on a length of the data symbol and a length of the guard interval sequence.

In a possible implementation, eight pilot sequences whose lengths of pilot symbols are 8 and corresponding PAPRs are as follows:
a sequence 1 = (-1, -1, -1, -1, 1, -1, -1, 1), and a PAPR corresponding to the sequence 1 is 11.6931;
a sequence 2 = (1, 1, 1, 1, -1, 1, 1, -1), and a PAPR corresponding to the sequence 2 = 11.6931;
a sequence 3 = (-1, -1, 1, -1, -1, 1, 1, 1), and a PAPR corresponding to the sequence 3 is 11.7001;
a sequence 4 = (1, 1, -1, 1, 1, -1, -1, -1), and a PAPR corresponding to the sequence 4 is 11.7001;
a sequence 5 = (-1, -1, -1, 1, 1, -1, 1, 1), and a PAPR corresponding to the sequence 5 is 11.7007;
a sequence 6 = (1, 1, 1, -1, -1, 1, -1, -1), and a PAPR corresponding to the sequence 6 is 11.7007;
a sequence 7 = (-1, -1, 1, -1, -1, -1, -1, 1), and a PAPR corresponding to the sequence 7 is 11.7061; and
a sequence 8 = (1, 1, -1, 1, 1, 1, 1, -1), and a PAPR corresponding to the sequence 8 is 11.7061.

It may be understood that the eight pilot sequences may be all multiplied by -1 or an imaginary number j. In other words, the sequence 1 to the sequence 8 are all multiplied by -1 or an imaginary number j, to obtain eight new pilot sequences.

It should be noted that a sequence of the pilot sequences is merely an example, and the pilot sequence is not limited in this application. For example, when eight spatial streams are transmitted, eight pilot sequences are required. For another example, when five spatial streams are transmitted, five pilot sequences are required. For the five spatial streams, first five pilot sequences may be used, last five pilot sequences may be used, or five pilot sequences may be randomly selected. It may be understood that PAPRs corresponding to the first five pilot sequences are low.

When a length of the pilot sequence is sufficient (that is, the length is 8), an effect of phase compensation cannot be further improved by increasing the length of the pilot sequence. FIG. 11 is a schematic diagram of simulation results of phase tracking performance corresponding to different pilot symbol lengths according to this application. It can be learned from FIG. 11 that phase tracking performance when a length of a pilot sequence is 8 is basically the same as that when the length of the pilot sequence length is 16. To reduce system overheads caused by transmission, a pilot sequence whose pilot sequence length is 8 may be used.

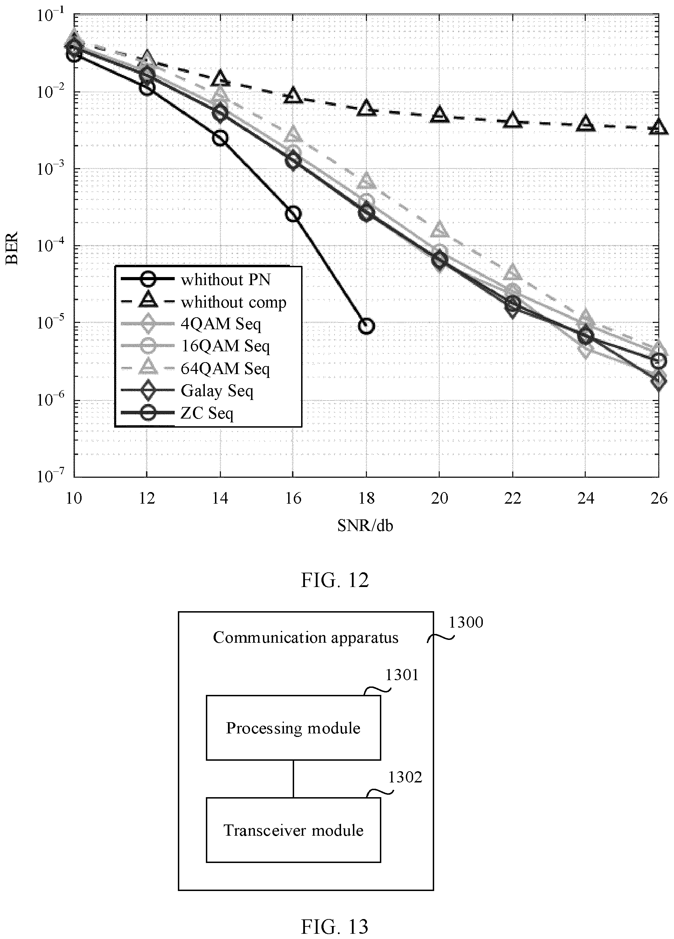

FIG. 12 is a schematic diagram of simulation results of tracking performance of different types of pilot sequences with a same quantity of points according to this application. It can be determined from FIG. 12 that different types of pilot sequences have a little effect on tracking performance. To simplify implementation and have a low PAPR, a Galay sequence may also be used as a pilot sequence.

It may be understood that, to implement the functions in the foregoing embodiments, a receive end and a transmit end include corresponding hardware structures and/or software modules for performing the functions. A person of ordinary skill in the art should easily be aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and configuration constraints of the technical solutions.

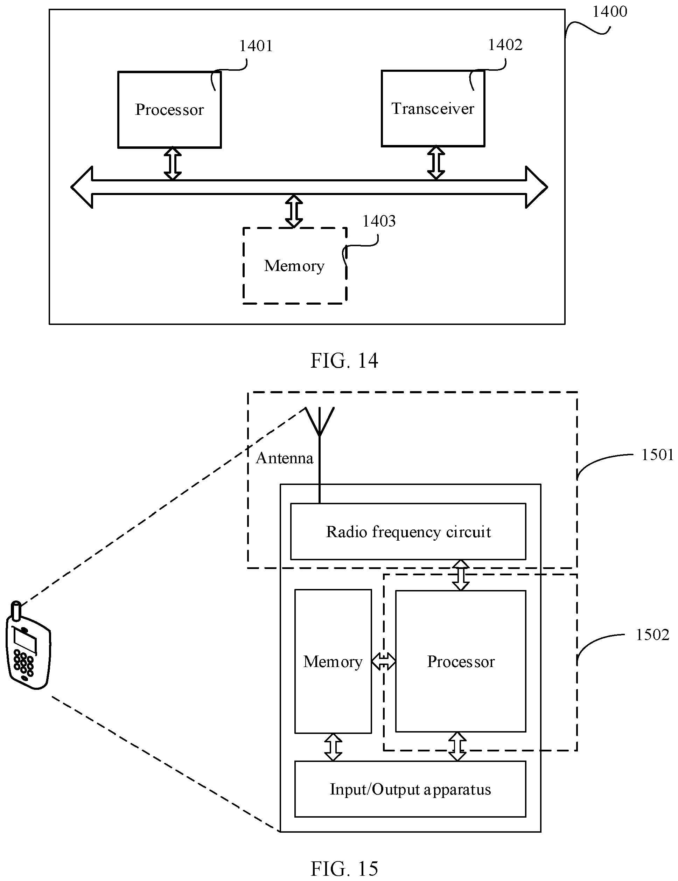

FIG. 13 and FIG. 14 each are a schematic diagram depicting a structure of a possible communication apparatus according to this application. These communication apparatuses may be configured to implement functions of a transmit end or a receive end in the foregoing method embodiments. Therefore, beneficial effects of the foregoing method embodiments can also be implemented. In this application, the communication apparatus may be an AP 101 shown in FIG. 1a, or may be a STA 102 or a STA 103 shown in FIG. 1a, or may be a module (for example, a chip) used in the transmit end or the receive end.

As shown in FIG. 13, a communication apparatus 1300 includes a processing module 1301 and a transceiver module 1302. The communication apparatus 1300 is configured to implement a function of the transmit end or the receive end in the method embodiment shown in FIG. 2.

When the communication apparatus 1300 is configured to implement the function of the transmit end in the method embodiment shown in FIG. 2, the processing module 1301 is configured to determine a guard interval sequence based on a quantity of channel bondings and a quantity of subcarriers corresponding to a resource element of the channel bonding; and the transceiver module 1302 is configured to send a signal, where the signal includes the guard interval sequence, and the guard interval sequence is used to determine phase noise of the signal.

When the communication apparatus 1300 is configured to implement the function of the receive end in the method embodiment shown in FIG. 2, the transceiver module 1302 is configured to receive the signal, where the signal includes the guard interval sequence, the guard interval sequence is determined by the transmit end that sends the signal based on the quantity of the channel bondings and the quantity of the subcarriers corresponding to the resource elements of the channel bondings; and the processing module 1301 is configured to determine the phase noise of the signal based on the guard interval sequence.

For more detailed descriptions of the processing module 1301 and the transceiver module 1302, refer to related descriptions in the method embodiment shown in FIG. 2, and details are not described herein again.

It should be understood that the processing module 1301 in embodiments of this application may be implemented by a processor or a processor-related circuit component, and the transceiver module 1302 may be implemented by a transceiver or a transceiver-related circuit component.

Based on the foregoing content and a same concept, as shown in FIG. 14, this application further provides a communication apparatus 1400. The communication apparatus 1400 may include a processor 1401 and a transceiver 1402. The processor 1401 and the transceiver 1402 are coupled to each other. It may be understood that the transceiver 1402 may be an interface circuit or an input/output interface. Optionally, the communication apparatus 1400 may further include a memory 1403, configured to: store instructions executed by the processor 1401, or store input data required by the processor 1401 to run the instructions, or store data generated after the processor 1401 runs the instructions.

When the communication apparatus 1400 is configured to implement the method shown in FIG. 2, the processor 1401 is configured to perform a function of the processing module 1301, and the transceiver 1402 is configured to perform a function of the transceiver module 1302.

When the communication apparatus is a terminal device, FIG. 15 is a simplified schematic diagram depicting a structure of the terminal device. For ease of understanding and convenience of illustration, an example in which the terminal device is a mobile phone is used in FIG. 15. As shown in FIG. 15, a terminal device 1500 includes a processor, a memory, a radio frequency circuit, an antenna, and an input/output apparatus. The processor is mainly configured to: process a communication protocol and communication data, control the entire terminal device, execute a software program, and process data of the software program, for example, configured to support the terminal device 1500 in executing the method executed by a terminal device in any one of the foregoing embodiments. The memory is mainly configured to store the software program and the data. The radio frequency circuit is mainly configured to perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

After the terminal device is powered on, the processor may read the software program in the memory, explain and execute instructions of the software program, and process the data of the software program. When data needs to be sent, after performing baseband processing on the to-be-sent data, the processor outputs a baseband signal to the radio frequency circuit. After performing radio frequency processing on the baseband signal, the radio frequency circuit sends a radio frequency signal in a form of an electromagnetic wave through the antenna. When data is sent to the terminal device 1500, the radio frequency circuit receives a radio frequency signal through the antenna, converts the radio frequency signal into a baseband signal, and outputs the baseband signal to the processor. The processor converts the baseband signal into data, and processes the data.

In an optional implementation, the processor may include a baseband processor and a central processing unit. The baseband processor is mainly configured to process the communication protocol and the communication data. The central processing unit is mainly configured to: control the entire terminal device 1500, execute the software program, and process the data of the software program. The processor in FIG. 15 integrates functions of the baseband processor and the central processing unit. It should be noted that the baseband processor and the central processing unit may alternatively be independent processors, and are interconnected through a technology such as a bus. In addition, the terminal device may include a plurality of baseband processors to adapt to different network standards. The terminal device 1500 may include a plurality of central processing units to enhance a processing capability of the terminal device 1500. Components of the terminal device 1500 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in a storage module in a form of a software program. The processor executes the software program to implement a baseband processing function.

In this application, an antenna and a control circuit having a transceiver function may be considered as a transceiver module of the terminal device, and a processor having a processing function may be considered as a processing module of the terminal device. As shown in FIG. 15, the terminal device includes a processing module 1501 and a transceiver module 1502. The transceiver module may also be referred to as a transceiver, a transceiver machine, a transceiver apparatus, or the like. The processing module may also be referred to as a processor, a processing board, a processing unit, a processing apparatus, or the like. Optionally, a component that is configured to implement a receiving function and that is in the transceiver module may be considered as a receiving module, and a component that is configured to implement a sending function and that is in the transceiver module may be considered as a transport module. That is, the transceiver module includes the receiving module and the transport module. The receiving module may also be referred to as a receiver, a receiver machine, a receiver circuit, or the like. The transport module may be referred to as a transmitter, a transmitter machine, a transmitter circuit, or the like.

On a downlink, a downlink signal (including data and/or control information) sent by a network device is received through the antenna. On an uplink, an uplink signal (including data and/or control information) is sent to the network device or another terminal device through the antenna. In the processor, service data and a signaling message are processed, and these modules perform processing based on a radio access technology (such as access technologies in LTE, NR, and other evolved systems) used by a radio access network. The processor is further configured to control and manage an action of the terminal device, to perform processing performed by the terminal device in the foregoing embodiments. The processor is further configured to support the terminal device in performing an execution method related to the transmit end in FIG. 2.

It should be noted that FIG. 15 shows only one memory, one processor, and one antenna. In an actual terminal device, the terminal device may include any quantity of antennas, memories, processors, and the like. The memory may also be referred to as a storage medium, a storage device, or the like. This is not limited in this application. In addition, the memory may be disposed independent of the processor, or may be integrated with the processor. This is not limited in this embodiment of this application.

It should be understood that the transceiver module 1502 is configured to perform a sending operation or a receiving operation of the transmit end or the receive end in the method embodiment shown in FIG. 2, and the processing module 1501 is configured to perform another operation of the transmit end or the receive end in the method embodiment shown in FIG. 2 except the sending operation and the receiving operation. For example, the transceiver module 1502 is configured to perform a sending step on a transmit end side in the embodiment shown in FIG. 2, for example, step 202. The processing module 1501 is configured to perform another operation on the transmit end side except the transmit operation in the embodiment shown in FIG. 2, for example, step 201. For another example, the transceiver module 1502 is configured to perform a receiving step on a receive end side in the embodiment shown in FIG. 2. The processing module 1501 is configured to perform another operation other than the receiving operation on the receive end side in the embodiment shown in FIG. 2, for example, step 203.

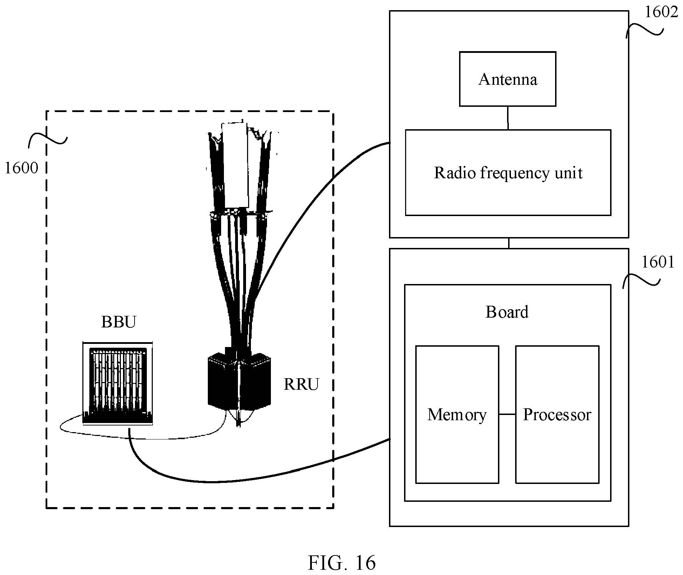

When the communication apparatus is a network device, FIG. 16 is an example of a schematic diagram depicting a structure of a network device according to this application. As shown in FIG. 16, a network device 1600 may include one or more remote radio units (remote radio unit, RRU) 1602 and one or more baseband units (baseband unit, BBU) 1601. The RRU 1602 may be referred to as a transceiver module, a transceiver machine, a transceiver circuit, a transceiver, or the like, and may include at least one antenna and a radio frequency unit. The RRU 1602 is mainly configured to: send and receive a radio frequency signal and perform conversion between the radio frequency signal and a baseband signal. The BBU 1601 may be referred to as a processing module, a processor, or the like, is mainly configured to perform baseband processing, for example, channel coding, multiplexing, modulation, and frequency spread, and is also configured to control the network device, and so on. The RRU 1602 and the BBU 1601 may be physically disposed together, or may be physically separated, that is, in a distributed network device.

In an optional implementation, the BBU 1601 may include one or more boards, and the plurality of boards may jointly support a radio access network of a single access standard, or may separately support radio access networks of different access standards. The BBU 1601 further includes a memory and a processor. The memory is configured to store necessary instructions and data. The processor is configured to control the network device to perform a necessary action, for example, configured to control the network device to perform the method performed by the network device in any one of the foregoing embodiments. The memory and the processor may serve one or more boards. In other words, a memory and a processor may be independently disposed on each board. Alternatively, the plurality of boards may share a same memory and a same processor. In addition, a necessary circuit is further disposed on each board.

On an uplink, an uplink signal (including data and the like) sent by the terminal device is received through the antenna, and on a downlink, a downlink signal (including data and/or control information) is sent to the terminal device through the antenna. The processor processes service data and a signaling message based on a radio access technology (for example, an access technology in LTE, NR, and another evolved system) used for a radio access network. The processor is further configured to: control and manage an action of the network device, and perform processing performed by the network device in the foregoing embodiments. The processor is further configured to support the network device in performing the method performed by the transmit end or the receive end in FIG. 2.

It should be noted that FIG. 16 shows only a simplified configuration of the network device. In actual application, the network device may include any quantity of antennas, memories, processors, radio frequency modules, RRUs, BBUs, and the like, and all network devices that can implement this application fall within the protection scope of this application.

It should be understood that the transceiver module 1502 is configured to perform a sending operation or a receiving operation of the transmit end or the receive end in the method embodiment shown in FIG. 2, and the processing module 1501 is configured to perform another operation of the transmit end or the receive end in the method embodiment shown in FIG. 2 except the sending operation and the receiving operation. For example, the transceiver module 1502 is configured to perform a sending step on a transmit end side in the embodiment shown in FIG. 2, for example, step 202. The processing module 1501 is configured to perform another operation on the transmit end side except the transmit operation in the embodiment shown in FIG. 2, for example, step 201. For another example, the transceiver module 1502 is configured to perform a receiving step on a receive end side in the embodiment shown in FIG. 2. The processing module 1501 is configured to perform another operation other than the receiving operation on the receive end side in the embodiment shown in FIG. 2, for example, step 203.

It should be noted that the processor in embodiments of this application may be a central processing unit (Central Processing Unit, CPU), may be another general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logical device, a transistor logical device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instruction may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may further be a component of the processor. The processor and the storage medium may be located in an ASIC. In addition, the ASIC may be located in a network device or a terminal device. Certainly, the processor and the storage medium may exist in a network device or a terminal device as discrete components.

All or some of the foregoing embodiments may be implemented through software, hardware, firmware, or any combination thereof. When software is used to implement the embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, a user device, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium such as a floppy disk, a hard disk, or a magnetic tape, may be an optical medium such as a digital video disc (digital video disc, DVD), or may be a semiconductor medium such as a solid-state drive (solid state drive, SSD).

In embodiments of this application, unless otherwise stated or there is a logical conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The symbol "/" in the text description of this application generally represents an "or" relationship between associated objects. In a formula of this application, the symbol "/" indicates a "division" relationship between associated objects.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined according to functions and internal logic of the processes. The terms "include" and "have" and any variations thereof are intended to cover non-exclusive inclusions. For example, a series of steps or modules are included. Methods, systems, products, or devices are not necessarily limited to those explicitly listed steps or modules, but may include other steps or units that are not explicitly listed or that are inherent to such processes, methods, products, or devices.

It is clear that a person skilled in the art can make various modifications and variations to embodiments of this application without departing from the spirit and scope of this application. This application is intended to cover these modifications and variations of embodiments of this application provided that they fall within the scope of the claims of this application and equivalent technologies thereof.

## Claims

1. A signal transmission method, applied to a discrete Fourier transform spread orthogonal frequency division multiplexing DFT-S-OFDM system, wherein the method comprises:
determining, by a transmit end, a guard interval sequence based on a quantity of channel bondings and a quantity of subcarriers corresponding to a resource element of the channel bonding; and
sending, by the transmit end, a signal, wherein the signal comprises the guard interval sequence, and the guard interval sequence is used to determine phase noise of the signal.

2. A signal transmission method, applied to a discrete Fourier transform spread orthogonal frequency division multiplexing DFT-S-OFDM system, wherein the method comprises:
receiving, by a receive end, a signal, wherein the signal comprises a guard interval sequence, and the guard interval sequence is determined by a transmit end that sends the signal based on a quantity of channel bondings and a quantity of subcarriers corresponding to a resource element of the channel bonding; and
determining, by the receive end, phase noise of the signal based on the guard interval sequence.

3. The method according to claim 1 or 2, wherein when the quantity of channel bondings is 1, and the resource element corresponds to 128 subcarriers, a length of the guard interval sequence is 8, 16, or 32.

4. The method according to claim 1 or 2, wherein when the quantity of channel bondings is 2, and the resource element corresponds to 256 subcarriers, a length of the guard interval sequence is 16, 32, or 64.

5. The method according to claim 1 or 2, wherein when the quantity of channel bondings is 3, and the resource element corresponds to 384 subcarriers, a length of the guard interval sequence is 24, 48, or 96.

6. The method according to claim 1 or 2, wherein when the quantity of channel bondings is 4, and the resource element corresponds to 512 subcarriers, a length of the guard interval sequence is 32, 64, or 128.

7. The method according to claim 1 or 2, wherein when the channel comprises eight guard interval sequences, and a length of the guard interval sequence is 8, 16, 32, or 128, the eight guard interval sequences are eight mutually different and orthogonal sequences.

8. The method according to claim 1 or 2, wherein when the channel comprises eight guard interval sequences, and a length of the guard interval sequence is 24 or 48, the eight guard interval sequences comprise two mutually different sequences.

9. The method according to claim 1 or 2, wherein when the channel comprises eight guard interval sequences, and the length of the guard interval sequence is 64, the eight guard interval sequences comprise five mutually different sequences, and there are two pairs of orthogonal sequences and two pairs of identical sequences.

10. The method according to claim 1 or 2, wherein when the channel comprises eight guard interval sequences, and a length of the guard interval sequence is 96, the eight guard interval sequences comprise four mutually different sequences.

11. The method according to any one of claims 1 to 10, wherein the signal further comprises a pilot sequence.

12. The method according to claim 11, wherein a length of the pilot sequence is 8; and
when the signal comprises eight pilot sequences, the eight pilot sequences are different from each other and are orthogonal to each other.

13. A communication apparatus, comprising a module configured to perform the method according to any one of claims 1 to 12.

14. A communication apparatus, comprising a processor and a transceiver, wherein the transceiver is configured to receive a signal from another communication apparatus other than the communication apparatus and transmit the signal to the processor, or send a signal from the processor to the another communication apparatus other than the communication apparatus, and the processor is configured to implement the method according to any one of claims 1 to 12 by using a logic circuit or executing code instructions.

15. A computer-readable storage medium, wherein the computer-readable storage medium stores a computer program or instructions, and when the computer program or the instructions is/are executed by a communication apparatus, the method according to any one of claims 1 to 12 is implemented.

16. A computer program product, wherein the computer program product comprises a computer program or instructions, and when the computer program or the instructions is/are executed by a communication apparatus, the method according to any one of claims 1 to 12 is implemented.
